(19)

Europäisches
Patentamt
European
Patent Office
Office européen
des brevets

(11) **EP 3 021 133 A1**

(12) **EUROPEAN PATENT APPLICATION**

(43) Date of publication:
**18.05.2016 Bulletin 2016/20**

(51) Int Cl.:
**G01S 13/56** (2006.01)    **G01S 13/58** (2006.01)

(21) Application number: **15190889.4**

(22) Date of filing: **21.10.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **13.11.2014   KR 20140157956**

(71) Applicant: **Samsung Electronics Co., Ltd.
Gyeonggi-do 16677 (KR)**

(72) Inventors:
• **YOO, Ho June**
  **Seoul (KR)**
• **SOH, Byung Seok**
  **Gyeonggi-do (KR)**
• **SON, Chang Won**
  **Seoul (KR)**
• **YU, Mi Ra**
  **Seoul (KR)**
• **CHOI, Sang On**
  **Gyeonggi-do (KR)**

(74) Representative: **Appleyard Lees IP LLP
15 Clare Road
Halifax HX1 2HY (GB)**

(54) **DISPLAY APPARATUS AND CONTROL METHOD THEREOF**

(57)    A display apparatus installed in a predetermined installation surface, includes: a display configured to display an image; a sensing module configured to include a circuit portion generating a wireless transmission signal, a transmitter being in electric contact with the circuit portion and transmitting the wireless transmission signal from the circuit portion to an external object to be sensed, and a receiver being in contact with the circuit portion and receiving the wireless reception signal reflected from the object to be sensed; and at least one processor configured to determine that the object to be sensed is moving if a change in amplitude of the wireless transmission signal and the wireless reception signal in the sensing module is higher than a preset first threshold and a phase difference between the wireless transmission signal and the wireless reception signal is higher than a preset second threshold, and perform a preset corresponding signal process in accordance with the determination results.

FIG. 5

EP 3 021 133 A1

**Description**

BACKGROUND

1. Field

Apparatuses and methods consistent with exemplary embodiments relate to a display apparatus that displays an image based on image data by itself or outputs image data processed in accordance with an image processing process to an external apparatus for displaying an image based on the image data and a method of controlling the same, and more particularly to a display apparatus and a control method thereof, in which movement of various objects including a user within a use environment of the display apparatus is sensed and various operations are performed corresponding to sensed results.

2. Description of the Related Art

An image processing apparatus processes an image signal/video data received from the exterior in accordance with various video processing processes. The image processing apparatus may display an image based on the processed video data on its own display panel, or output the processed image signal to another display apparatus provided with a panel so that on the corresponding display apparatus can display an image based on the processed image signal. That is, the image processing apparatus may include the panel capable of displaying an image or include no panel as long as it can process the video data. For example, the former may include a television (TV), and the latter may include a set-top box.

The image processing apparatus or the display apparatus provides one or more use environments, in which a user actively performs control, various his/her actions are sensed, and so on in order to operate corresponding to his/her intention. As an example of the use environment, the image processing apparatus may operate corresponding to a control signal received from a remote controller or menu key controlled by a user, or may operate corresponding to results of analyzing a user's speech input through a microphone or a user's gesture or the like sensed by a motion sensor.

It may be variously designed how to sense what motion of a user. For example, there is a structure of sensing and determining a user's movement by a Doppler radar sensor as a kind of radar system using the Doppler effect. The Doppler radar sensor uses a radio frequency (RF) signal, and thus noise added while transmitting and receiving the RF signal may adversely affect sensed results of the sensor. Therefore, excluding the effects of noise from the sensed results of the Doppler radar sensor is important to guarantee accuracy of the sensed results.

SUMMARY

In an aspect of one or more embodiments, there is provided a display apparatus installed in a predetermined installation surface, which includes: a display configured to display an image; a sensing module configured to include a circuit portion which generates a wireless transmission signal, a transmitter which is in electric contact with the circuit portion and which transmits the wireless transmission signal from the circuit portion to an external object to be sensed, and a receiver which is in contact with the circuit portion and which receives the wireless reception signal reflected from the external object to be sensed; and at least one processor configured to determine that the external object to be sensed is moving if a change in amplitude of the wireless transmission signal and the wireless reception signal in the sensing module is higher than a preset first threshold and a phase difference between the wireless transmission signal and the wireless reception signal is higher than a preset second threshold, and configured to perform a preset corresponding signal process in accordance with the determination results. Thus, by excluding not the case where the external object to be sensed is moving but the case where there is noise or disturbance from the sensed results of the sensing module, it is possible to improve accuracy in results of sensing movement of the external object to be sensed.

The at least one processor may determine that the external object to be sensed is not moving and noise occurs due to signal interference between the transmitter and the receiver and the at least one processor may not perform the preset corresponding signal process if the change in amplitude is higher than the preset first threshold but the phase difference is not higher than the preset second threshold. Thus, it is possible to determine the cases due to noise or disturbance among the cases where the change in the amplitude is higher than the preset first threshold.

The at least one processor may determine the phase difference by mixing the wireless transmission signal and the wireless reception signal into a first signal, mixing the wireless transmission signal shifted in phase and the wireless reception signal into a second signal, and comparing the second threshold with an amplitude of a third signal generated based on difference in amplitude between the first signal and the second signal. The wireless transmission signal may be shifted in phase by 90 degrees when the second signal is generated. The third signal may be generated based on at least one among a differential of the second signal from the first signal, a differential of the first signal from the second signal, an absolute value of the differential between the first signal and the second signal, and the differential between the first signal and the second signal to the power of n, where n is an integer greater than zero. Thus, even when it is actually difficult to directly calculate the phase difference, it is easy to indirectly determine how much the phase difference is.

The at least one processor may determine the change in amplitude of the wireless transmission signal and the wireless reception signal by mixing the wireless transmission signal and the wireless reception signal into a first signal, mixing the wireless transmission signal shifted in phase and the wireless reception signal into a second signal, and comparing the first threshold with an amplitude of a fourth signal which is generated by applying normalization to the first signal and the second signal. The normalization may be performed by at least one of a signal envelop calculation and a norm calculation. Thus, before determining the phase difference between the wireless transmission signal and the wireless reception signal, it is possible to determine a point of time or time slot when the external object to be sensed starts moving or when noise occurs.

The at least one processor may determine that the external object to be sensed is not moving if the change in amplitude of the wireless transmission signal and the wireless reception signal is not higher than the first threshold. Thus, it is possible to determine a time slot during which the external object to be sensed does not move and there is no noise.

In an aspect of one or more embodiments, there is provided a method of controlling a display apparatus installed in a predetermined installation surface, which includes: transmitting a wireless transmission signal from a transmitter to an external object to be sensed; receiving a wireless reception signal, reflected from the external object to be sensed, in a receiver; and determining that the external object to be sensed is moving if a change in amplitude of the wireless transmission signal and the wireless reception signal in the sensing module is higher than a preset first threshold and a phase difference between the wireless transmission signal and the wireless reception signal is higher than a preset second threshold, and performing a preset corresponding signal process in accordance with the determination results. Thus, by excluding not the case where the external object to be sensed is moving but the case where there is noise or disturbance while the movement of the external object to be sensed is sensed based on the wireless signal, it is possible to improve accuracy in results of sensing movement of the external object to be sensed.

The method may further include determining that the external object to be sensed is not moving and noise occurs due to signal interference between the transmitter and the receiver and performing no corresponding preset signal process if the change in amplitude is higher than the preset first threshold but the phase difference is not higher than the preset second threshold. Thus, it is possible to determine the cases due to noise or disturbance among the cases where the change in the amplitude is higher than the preset first threshold.

The determining may include generating a first signal by mixing the wireless transmission signal and the wireless reception signal, and generating a second signal by mixing the wireless transmission signal shifted in phase and the wireless reception signal; and determining the phase difference by comparing the preset second threshold with an amplitude of a third signal generated based on difference in amplitude between the first signal and the second signal.

The wireless transmission signal may be shifted in phase by 90 degrees when the second signal is generated. The third signal may be generated based on at least one among a differential of the second signal from the first signal, a differential of the first signal from the second signal, an absolute value of the differential between the first signal and the second signal, and the differential between the first signal and the second signal to the power of n, where n is an integer greater than zero. Thus, even when it is actually difficult to directly calculate the phase difference, it is easy to indirectly determine how much the phase difference is.

The determining may include generating a first signal by mixing the wireless transmission signal and the wireless reception signal into a first signal, and generating a second signal by mixing the wireless transmission signal shifted in phase and the wireless reception signal; and determining the change in amplitude of the wireless transmission signal and the wireless reception signal by comparing the preset first threshold with an amplitude of a fourth signal generated by applying normalization to the first signal and the second signal. The normalization may be performed by at least one of a signal envelop calculation and a norm calculation. Thus, before determining the phase difference between the wireless transmission signal and the wireless reception signal, it is possible to determine a point of time or time slot when the external object to be sensed starts moving or when noise occurs.

The method may further include determining that the object to be sensed is not moving if the change in amplitude of the wireless transmission signal and the wireless reception signal is not higher than the first threshold. Thus, it is possible to determine a time slot during which the object to be sensed does not move and there is no noise.

In an aspect of one or more embodiments, there is provided a method of controlling a display apparatus installed in a predetermined installation surface, which includes: activating an infrared sensor and inactivating a Doppler sensor; determining whether the infrared sensor senses an external object; activating the Doppler sensor if the infrared sensor senses the external object; and determining whether the external object is moving by using the Doppler sensor, wherein the determination as to whether the external object is moving includes: transmitting a wireless transmission signal from a transmitter to the external object to be sensed by the Doppler sensor, receiving a wireless reception signal, reflected from the external object to be sensed by the Doppler sensor, in a receiver, and determining that the external object to be sensed by the Doppler sensor is moving if a change in amplitude of the wireless transmission signal and the wireless reception signal in the sensing module is higher than a preset first threshold and a phase difference between the wireless transmission signal and the wireless reception signal is higher than a preset second threshold, and performing a preset corresponding signal process in accordance with the determination results.

In an aspect of one or more embodiments, there is provided In an aspect of one or more embodiments, there is provided a display apparatus installed in a predetermined installation surface, which includes: a display configured to display an image; a first sensing module configured to detect movement of an external object using an infrared sensor; a second sensing module configured to comprise a circuit portion which generates a wireless transmission signal, a transmitter which is in electric contact with the circuit portion and which transmits the wireless transmission signal from the circuit portion to the external object to be sensed, and a receiver which is in contact with the circuit portion and which receives a wireless reception signal reflected from the external object to be sensed, wherein the second sensing module is activated if the infrared sensor senses the external object; and at least one processor configured to determine that the external object to be sensed is moving if a change in amplitude of the wireless transmission signal and the wireless reception signal in the second sensing module is higher than a preset first threshold and a phase difference between the wireless transmission signal and the wireless reception signal is higher than a preset second threshold, and configured to perform a preset corresponding signal process in accordance with the determination results.

In an aspect of one or more embodiments, there is provided at least one non-transitory computer readable medium storing computer readable instructions which when executed implement methods of one or more embodiments.

According to the present invention there is provided an apparatus and method as set forth in the appended claims. Other features of the invention will be apparent from the dependent claims, and the description which follows.

BRIEF DESCRIPTION OF THE DRAWINGS

For a better understanding of the invention, and to show how embodiments of the same may be carried into effect, reference will now be made, by way of example, to the accompanying diagrammatic drawings in which:

FIG. 1 shows an example of an image processing apparatus according to an exemplary embodiment;
FIG. 2 is a block diagram of the image processing apparatus shown in FIG. 1;
FIG. 3 shows an example of schematically illustrating the Doppler effect;
FIG. 4 shows an example of illustrating a principle of a Doppler radar sensor that senses velocity of an object;
FIG. 5 shows an example of illustrating a principle of an I-Q type Doppler radar sensor;
FIG. 6 shows an example of comparatively illustrating a lag and a lead between phases of two signals;
FIG. 7 shows an example of the Doppler radar sensor applied to the image processing apparatus of FIG. 1;
FIG. 8 is a block diagram of a sensor provided in the image processing apparatus of FIG. 1;
FIG. 9 shows an example of illustrating a principle of a signal envelope calculation;
FIG. 10 shows an example of illustrating change in respective waveforms of an I-signal and a Q-signal due to movement of an object and disturbance;
FIG. 11 is a flowchart of showing a process that the image processing apparatus of FIG. 1 determines whether the object is moving or not;
FIG. 12 is a flowchart of showing a process that the image processing apparatus of FIG. 1 determines a phase difference in order to determine whether the object is moving or not;
FIG. 13 is a graph of illustrating the respective waveforms of the I-signal and the Q-signal derived from experimental results according to an exemplary embodiment;
FIG. 14 is a graph of illustrating a waveform of a C-signal based on the I-signal and the Q-signal shown in FIG. 13;
FIG. 15 is a graph of illustrating a waveform of a D-signal based on the I-signal and the Q-signal shown in FIG. 13;
FIG. 16 is a graph where a time section A1 of FIG. 13 is enlarged;
FIG. 17 is a graph where a time section A1 of FIG. 14 is enlarged;
FIG. 18 is a graph where a time section A1 of FIG. 15 is enlarged;
FIG. 19 is a graph where a time section A2 of FIG. 13 is enlarged;
FIG. 20 is a graph where a time section A2 of FIG. 14 is enlarged;
FIG. 21 is a graph of enlarging a time section A2 of FIG. 15 is enlarged;
FIG. 22 is a block diagram of an image processing apparatus according to an exemplary embodiment;
FIG. 23 is a flowchart of illustrating a control method of an image processing apparatus according to an exemplary embodiment;
FIG. 24 shows an example of installing the Doppler radar sensor according to an exemplary embodiment;
FIG. 25 shows an example of illustrating a rear of a display apparatus according to an exemplary embodiment;
FIG. 26 is a cross-section view of the display apparatus of FIG. 25, taken along line A-A; and

FIGs. 27 to 29 are examples that the display apparatus performs a preset operation in accordance with whether a user is moving or not.

DETAILED DESCRIPTION

Below, exemplary embodiments will be described in detail with reference to accompanying drawings. The following descriptions of exemplary embodiments are made by referring to elements shown in the accompanying drawings, in which like numerals refer to like elements having substantively the same functions.

In the description of exemplary embodiments, an ordinal number used in terms such as a first element, a second element, etc. is employed for describing variety of elements, and the terms are used for distinguishing between one element and another element. Therefore, the meanings of the elements are not limited by the terms, and the terms are also used just for explaining the corresponding embodiment without limiting embodiments.

Further, exemplary embodiments will describe only elements directly related to the embodiments, and description of the other elements will be omitted. However, it will be appreciated that the elements, the descriptions of which are omitted, are not unnecessary to realize the apparatus or system according to exemplary embodiments. In the following descriptions, terms such as "include" or "have" refer to presence of features, numbers, steps, operations, elements or combination thereof, and do not exclude presence or addition of one or more other features, numbers, steps, operations, elements or combination thereof.

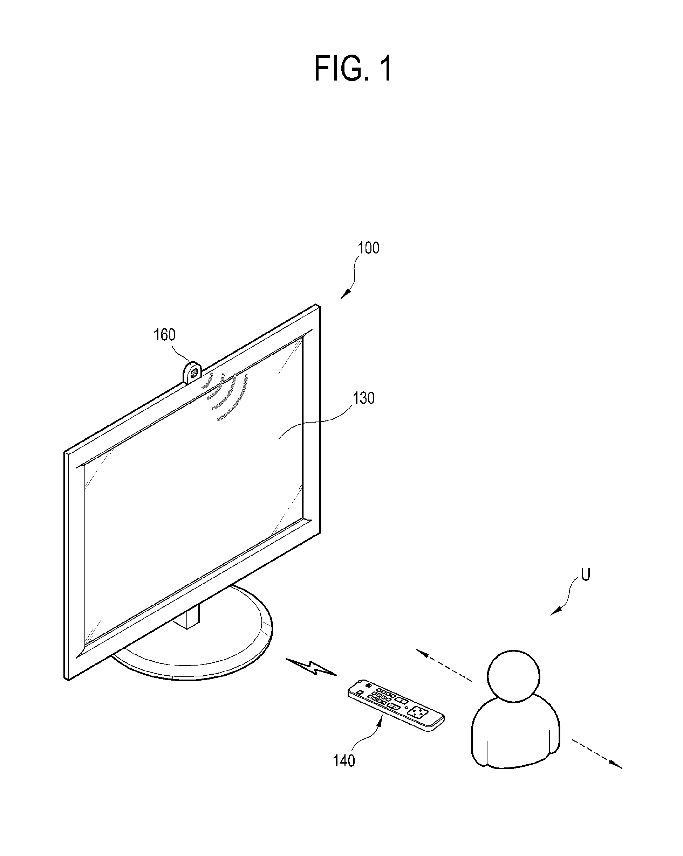

FIG. 1 shows an example of an image processing apparatus 100 according to an exemplary embodiment.

As shown in FIG. 1, the image processing apparatus 100 is a display apparatus with a display 130 capable of displaying an image by itself, and may include a television (TV). However, the image processing apparatus 100 may be achieved not only by the display apparatus with the display 130 but also in the form of having no display. For example, the former may include a monitor, an electronic blackboard, an electronic picture frame, an electronic billboard, etc., and the latter may include a set-top box, a multimedia player, etc. Besides, the image processing apparatus 100 may be achieved in various forms. For instance, the image processing apparatus 100 may be applied to a stationary form to be stationarily installed and used in one place rather than a mobile form to be freely carried and used by a user. Alternatively, one or more embodiments may be applied to not only the image processing apparatus but also an electronic apparatus having other functions than an image-related function.

The image processing apparatus 100 receives a broadcast signal or the like video data/video signal from the exterior, and processes it in accordance with preset processes, thereby displaying an image on the display 130. If the image processing apparatus does not have the display 130, the image processing apparatus 100 transmits the video data to another display apparatus (not shown) so that an image can be displayed on the display apparatus (not shown).

In addition to such a function of processing the video data, the image processing apparatus 100 supports various functions related to or indirectly related to an image. To implement the functions supported by the image processing apparatus 100 in actual use environment, the image processing apparatus 100 performs a preset function or operation in response to various types of events input from a user U.

In order to receive an input event from a user U, the image processing apparatus 100 may have a mode that a user U directly controls an input 140 such as a remote controller separated from the image processing apparatus 100 or a menu key provided outside the image processing apparatus 100. Besides a mode that a user controls the input 140, the image processing apparatus 100 may have another mode that a sensor 160 including various sensors senses change in a state of a user U. In this exemplary embodiment, it will be described that the sensor 160 senses a moving state of a user U.

This exemplary embodiment describes that an object to be sensed by the sensor 160 is a human, but not limited thereto. Alternatively, the object to be sensed by the sensor 160 may include a living organism other than a human, a self-operating machine such as a robot, etc.

For example, a system power for the image processing apparatus 100 may be turned from off to on or from on to off as a user U comes near to or goes away from the image processing apparatus 100. If the system power is turned from off to on when it is sensed that a user U comes near to the image processing apparatus 100, the sensor 160 senses whether the user U moves in a direction of coming close to or going away from the image processing apparatus 100.

For example, the image processing apparatus 100 may perform a function of switching the system power in response to a moving velocity of a user U. If the moving velocity of the user U is higher than a preset threshold, the sensor 160 may sense and calculate the moving velocity of a user U when the system power is switched.

To perform this function, various technologies may be applied to the sensor 160. For example, the sensor 160 includes a continuous-wave (CW) Doppler radar sensor based on Doppler effects. The Doppler radar type sensor 160 can sense a moving speed and a moving direction of a user U while s/he is moving. The structure and operation of the sensor 160 will be described later.

Below, the image processing apparatus 100 according to an exemplary embodiment will be described in detail.

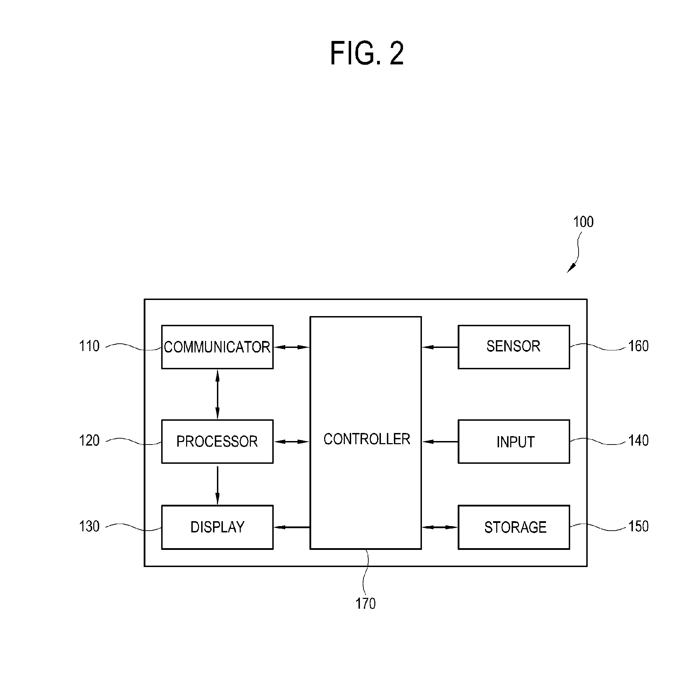

FIG. 2 is a block diagram of the image processing apparatus 100.

As shown in FIG. 2, the image processing apparatus 100 includes a communicator 110 which communicates with the exterior to transmit and receive data/a signal, a processor which processes the data received in the communicator 110 in accordance with preset processes, a display 130 which displays an image based on image data processed by the processor 120, an input 140 which receives a user's input operation, a storage 150 which stores data, a sensor 160 which detects a user's position, and a controller 170 which controls general operations of the image processing apparatus 100 such as the processor 120.

The communicator 110 transmits and receives data locally or through a network so that the image processing apparatus 100 can interactively communicate with the exterior. For example, the communicator 110 connects with an external device (not shown) through wired/wireless wide region network in accordance with preset communication protocols. The communicator 110 may be achieved by a connection port based on communication standards or a set of connection modules, and therefore the protocol for connection or an external device (not shown) to be connected is not limited to one kind or type. The communicator 110 may be built in the image processing apparatus 100, or the whole or some elements of the communicator 110 may be additionally installed in the form of add-on or dongle in the image processing apparatus 100.

The communicator 110 may transmit and receive a signal based on individual communication protocols with respect to respective connected devices. In the case of the image data, the communicator 110 may transmit and receive a signal based on various standards such as radio frequency (RF), composite/component video, super video, Syndicat des Constructeurs d'Appareils Radiorécepteurs et Téléviseurs (SCART), high definition multimedia interface (HDMI), DisplayPort, unified display interface (UDI), wireless high definition (HD), etc.

The processor 120 performs various processes to data/a signal received in the communicator 110. If the image data is received in the communicator 110, the processor 120 performs a video processing process to the image data and outputs the processed image data to the display 130, thereby allowing the display 130 to display an image based on the image data. Alternatively, if a broadcast signal is received in the communicator 110 tuned to a certain channel, the processor 120 extracts video, audio and data from the broadcast signal and adjusts the image to have a preset resolution so that the display 130 can display the image.

There is no limit to the kind of video processing process performed by the processor 120, and the video processing process may for example include decoding corresponding to image formats of image data, de-interlacing for converting image data from an interlaced type into a progressive type, frame refresh rate conversion, scaling for adjusting the image data to have a preset resolution, noise reduction for improving image quality, detail enhancement, frame refresh rate conversion, etc.

The processor 120 may perform various processes in accordance with the kind and properties of data, and therefore the process of the processor 120 is not limited to the video processing process. Further, the data that can be processed by the processor 120 is not limited to data received in the communicator 110. For example, if a user's speech is input to the image processing apparatus 100, the processor 120 may process the speech in accordance with preset audio processing processes. The processor 120 may be achieved in the form of a system-on-chip (SoC) where various functions corresponding to such processes are integrated, or an image processing board where individual chip-set for independently performing the respective processes are mounted to a printed circuit board. Thus, the image processing apparatus 100 includes the built-in processor 120.

The display 130 displays an image based on an image signal/image data processed by the processor 120. The display 130 may be achieved by various display types such as liquid crystal, plasma, a light-emitting diode, an organic light-emitting diode, a surface-conduction electron emitter, a carbon nano-tube, nano-crystal, etc. liquid without limitation.

The display 130 may include additional elements in accordance with its types. For example, if the display is achieved by the liquid crystal, the display 130 includes a liquid crystal display (LCD) panel (not shown), a backlight unit (not shown) for supplying light to the LCD panel, and a panel driving substrate (not shown) for driving the LCD panel (not shown).

The input 140 sends the controller 170 a variety of preset control commands or information in response to a user's operation or inputs. The input 140 sends the controller 170 various informationization events generated by a user's control corresponding to a user's intention and transmits it to the controller 170. The input 140 may be achieved in various forms for generating input information from a user. For example, the input 140 may include a key/a button installed outside the image processing apparatus 100, a remote controller provided remotely and separately from a main body of the image processing apparatus 100 and communicating with the communicator 110, or a touch screen integrated with the display 130.

The storage 150 stores a variety of data under control of the controller 170. The storage 150 is achieved by a flash-memory, a hard-disc drive or the like nonvolatile memory to preserve data regardless of supply of system power. The storage 150 is accessed by the processor 120 or the controller 160 and performs reading, writing, editing, deleting, updating or the like with regard to data.

The sensor 160 senses a moving state of a user with respect to the image processing apparatus 100. Specifically, the sensor 160 senses whether a user is moving or remains stationary with respect to the image processing apparatus 100. Further, if a user is moving, the sensor 160 senses whether s/he comes near to or goes away from the image processing apparatus 100. The sensor 160 transmits the sensed results to the controller 170 so that the controller 170 can perform a preset operation or function corresponding to the sensed results. In this exemplary embodiment, the sensor 160 includes a Doppler-radar type sensor in order to sense a moving state of a user, and details of this will be described later.

The sensor 160 may include only one kind of sensors, or may include a plurality of different kinds of sensors. For example, the sensor 160 may include only the Doppler radar type sensor, and may additionally include various sensors such as an infrared sensor, a camera, etc.

The controller 170 is achieved by a central processing unit (CPU), and controls operations of the image processing apparatus 100 in response to occurrence of a certain event. For example, the controller 170 controls the processor 120 to process image data of a certain content and the display 130 to display an image based on the processed image data when the image data is received in the communicator 110. Further, the controller 170 controls elements such as the processor 120 to perform an operation previously set corresponding to the corresponding event if a user's input event occurs through the input 140.

In particular, the controller 170 according to an exemplary embodiment controls a preset operation to be performed based on the sensed results of the sensor 160. For example, the controller 170 may control the system power to be switched on and off as the sensor 160 senses whether a user comes near to or goes away from the image processing apparatus 100.

Below, the sensor 160 according to an exemplary embodiment will be described in detail. As described above, the sensor 160 includes the Doppler radar sensor, and the Doppler radar sensor is based on the principle of the Doppler effects.

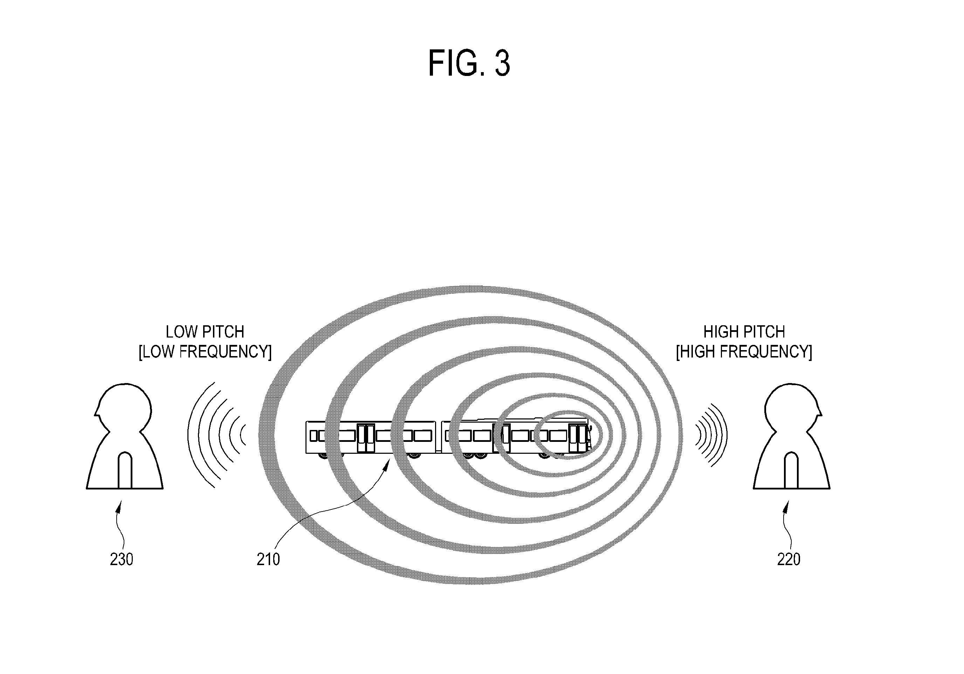

FIG. 3 schematically illustrates the principle of the Doppler effect.

As shown in FIG. 3, for example, when a train 210 sounding a horn is approaching and receding, it is heard in a particular way. That is, when the train 210 is approaching an observer 220, the horn sounds higher in pitch. On the other hand, when the train 210 is receding from the observer 230, the horn sounds lower in pitch. This is because the observers 220 and 230 hear a sound of waveforms different from original waveforms when at least one of the object 210 making the sound and the observers 220 and 230 is moving. This phenomenon is common to all kinds of waves, and is called the Doppler effect, proposed by Austrian physicist J. C. Doppler in 1842. In other words, the Doppler effect refers to that a frequency of a wave source observed by an observer is varied when one or both of the wave source and the observer is moving.

In case of sound waves, the Doppler effect can be mathematically represented as follows.

Suppose that a sound source making a sound having a frequency of f0 (Hz) is moving toward a stationary observer at a velocity of vs (m/s), and let velocity of sound be v (m/s). A ridge of a sound wave from the sound source propagates as much as V for 1 second, and the sound source moves as much as vs for the same time while making sound waves having the number of ridges of f0. In a direction where the sound source moves, a wavelength λ1 of since the number of ridges in the sound waves between v and vs (v-vs) is f0. Therefore, as shown in the following Expression, the wavelength is shorter than that of when the sound source is stationary.

[Expression 1]

$$\lambda_1 = \frac{(v - v_s)}{f_0}$$

However, the velocity of the propagating wave is not varied, and thus the frequency f1 of the sound observed by the observer satisfies the following Expression.

[Expression 2]

$$f_1 = \frac{v}{\lambda_1} = \frac{v}{v - v_s} f_0$$

That is, the frequency increases and causes an observer to hear sound higher in pitch than original sound.

On the other hand, if the sound source is receding, a frequency f'1 satisfies the following Expression.

[Expression 3]

$$f'_1 = \frac{v}{v + v_s} f_0$$

Next, suppose that the sound source is stationary and the observer is moving toward the stationary sound source at a velocity of v0 (m/s). Since the sound source is stationary, the sound wave propagating in a space has a wavelength of λ=v/f0, but the ridge of the wave approaches a moving observer at a velocity of v+v0. In result, the waves observed by the observer has a frequency f2 satisfying the following Expression.

[Expression 4]

$$f_2 = \frac{v + v_0}{\lambda} = \frac{v + v_0}{v} f_0$$

In addition, when both the sound source and the observer are moving, let velocities of them be vs and v0 respectively under the condition that a direction from the sound source toward the observer is a positive direction. In this case, a frequency f3 satisfies the following Expression.

[Expression 5]

$$f_3 = \frac{v - v_0}{v - v_s} f_0$$

Based on the foregoing principle, the Doppler radar sensor emits an electromagnetic wave or a radio frequency (RF) signal having a certain frequency to a moving object, and determines a moving state of the object based on change in the electromagnetic wave or RF signal reflected from the object in accordance with the direction and speed of the object. The moving state of the object to be sensed by the Doppler radar sensor may be variously determined by the types of the Doppler radar sensor.

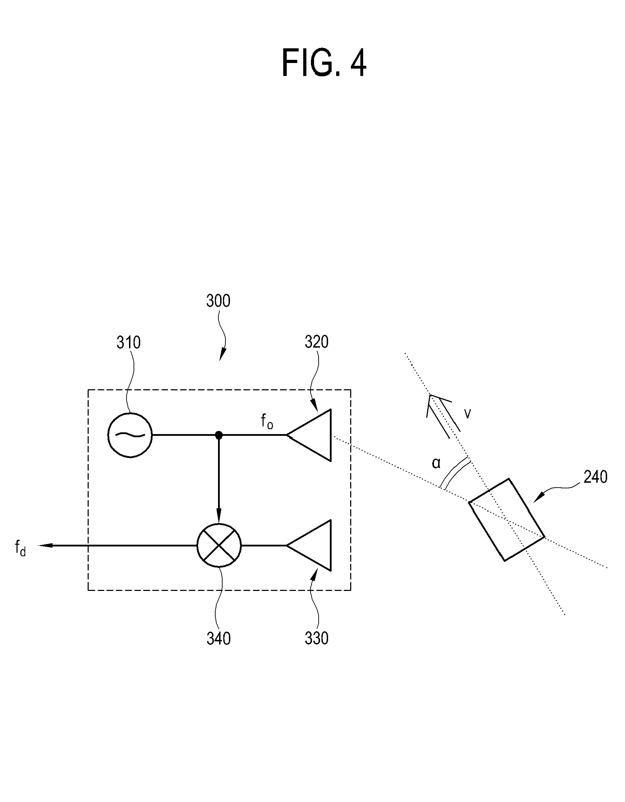

Below, the Doppler radar sensor 300 for sensing the velocity of the object 240 will be described with reference to FIG. 4.

FIG. 4 shows an example of the principle of the Doppler radar sensor 300 that senses velocity of an object 240.

As shown in FIG. 4, the moving object 240 is varied in frequency in proportion to its velocity, and therefore the Doppler radar sensor 300 determines the speed and direction of the moving object 240 by inversely calculating the varied frequency.

The Doppler radar sensor 300 includes an oscillator 310 for generating the RF signal or electromagnetic waves having an initial frequency of f0, a transmitter 320 for emitting the RF signal generated by the oscillator 310, a receiver 330 for receiving the RF signal emitted by the transmitter 320 and reflected from the object 240, and a mixer 340 for outputting a frequency difference fd based on difference between the RF signal generated by the oscillator 310 and the RF signal received in the receiver 330.

For convenience of description, the RF signal generated by the oscillator 310 and emitted to the object 240 through the transmitter 320 will be called a transmission signal or a wireless transmission signal, and the RF signal reflected from the object 240 and received in the receiver 330 will be called a reception signal or a wireless reception signal.

The transmission signal initially generated by the oscillator 310 is emitted to the outside via the transmitter 320, and reflected from the object 240 and received as the reception signal in the receiver 330. The mixer 340 derives a difference between the frequency of the transmission signal and the frequency of the reception signal from comparison between them.

Let the moving object 240 have a velocity of v, and an angle between an axial line of the object 240 in a moving direction and an axial line of the RF signal from the transmitter 320 in an emitting direction be α. Thus, the frequency difference fd between the transmission signal and the reception signal satisfies the following expression with regard to the moving object 240.

[Expression 6]

$$f_d = 2 \cdot f_0 \frac{v}{c_0} \cdot \cos\alpha$$

where, c0 is the speed of light.

Hence, it is possible to calculate the moving velocity of the object 240 based on the derived frequency difference. If it is desired to sense the moving speed of the object 240 rather than the moving direction, the Doppler radar sensor 300 may be, for example, applied to a speed checker for highways.

In the case of primarily sensing the moving direction of the object 240, there is a need of a Doppler radar sensor different in principle and structure from that of the foregoing example. The Doppler radar sensor for sensing the moving direction of the object 240 may be based on principles of sideband filtering, offset carrier demodulation, in-phase and quadrature demodulation, and so on. Among them, the in-phase and quadrature demodulation is abbreviated to an I-Q type, and the following exemplary embodiments will be described with respect to the I-Q type.

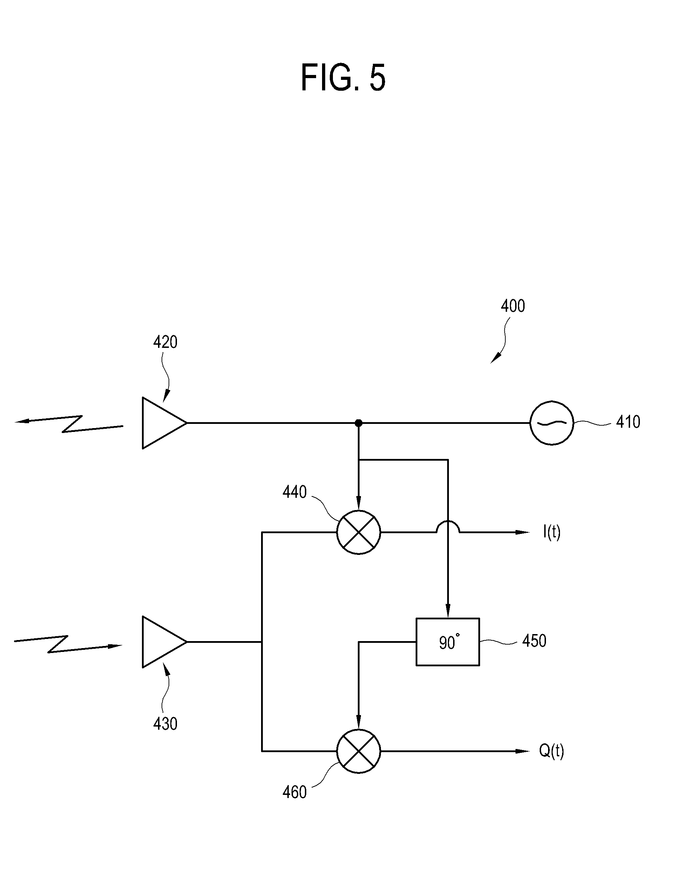

FIG. 5 shows an example of illustrating a principle of an I-Q type Doppler radar sensor 400.

As shown in FIG. 5, the Doppler radar sensor 400 includes an oscillator 410 for generating an RF signal, a transmitter 420 for emitting the RF signal generated by the oscillator 410 as the transmission signal, a receiver 430 for receiving the RF signal reflected from an external object as the reception signal, a first mixer 440 for outputting a first mixed signal by mixing the transmission signal and the reception signal, a phase shifter 450 for shifting a phase of the transmission signal as much as a preset phase difference, and a second mixer 460 for outputting a second mixed signal by mixing the transmission signal of which phase is shifted by the phase shifter 450 and the reception signal.

Let a waveform equation of the transmission signal transmitted from the transmitter 420 be Xt(t), and a waveform equation of the reception signal received in the receiver 430 be Xr(t). With this, the transmission signal and the reception signal are respectively represented by the following Expression.

[Expression 7]

$$X_t(t) = \xi_t \cdot \cos\omega_s t$$
$$X_r(t) = \xi_r \cdot \cos(\omega_s + \omega_d)t + \phi$$

where, $\xi_t$ is an amplitude of the transmission signal, $\omega_s$ is a frequency of the transmission signal, $\xi_r$ is an amplitude of the reception signal, $\omega_d$ is a frequency of the transmission signal, t is time, and $\varphi$ is a phase difference. That is, the moving direction and speed of the object cause a frequency difference of $\omega_d$ and a phase difference of $\varphi$ between the transmission signal and the reception signal. Therefore, if the phase difference $\varphi$ of Xr(t) is given, it is possible to determine whether the object is moving in a direction of coming near to or going away from the Doppler radar sensor 400.

With this structure, the transmission signal generated by the oscillator 410 is partially received through the transmitter 420 and partially transmitted to the first mixer 440 and the phase shifter 450. The transmission signal transmitted from the oscillator 410 to the transmitter 420, the first mixer 440 and the phase shifter 450 is the RF signal having the same properties.

The phase shifter 450 applies a phase difference of 90 degrees to the transmission signal of the oscillator 410 to generate the transmission signal of which phase is shifted, and transmits the transmission signal shifted in phase to the second mixer 460. The reason why the phase difference of 90 degrees is applied by the phase shifter 450 to the transmission signal will be described later.

The first mixer 440 receives the transmission signal from the oscillator 410 and the reception signal from the receiver 430. The first mixer 440 mixes the transmission signal and the reception signal and generates and outputs the first mixed signal. For convenience of description, the first mixed signal will be called a first signal or I-signal, and a waveform equation for the first mixed signal is I(t).

The second mixer 460 receives the transmission signal, of which phase is shifted, from the phase shifter 450, and the reception signal from the receiver 430. The second mixer 460 mixes the transmission signal, of which phase is shifted, and the reception signal to thereby generate and output the second mixed signal. For convenience of description, the second mixed signal will be called a second signal or Q-signal, and a waveform equation for the second mixed signal is Q(t).

Here, various circuit technologies related to signal processing may be applied to make the first mixer 440 and the second mixer 460 mix or synthesize two signals to output the mixed signals.

An I-signal I(t) output from the first mixer 440 and a Q-signal Q(t) output from the second mixer 460 satisfy the

following Expression.

[Expression 8]

$$I(t) = A \cdot \cos(\omega_d t + \phi)$$
$$Q(t) = A \cdot \sin(\omega_d t + \phi)$$

Since the phase difference of 90 degrees is applied by the phase shifter 450 to the transmission signal, I(t) and Q(t) have the same variables but are different in trigonometric functions of cosine and sine. That is, a relationship between I(t) and Q(t) is finally established by the foregoing Expression because the phase shifter 450 applies the phase difference of 90 degrees to the transmission signal.

Here, A satisfies the following Expression.

[Expression 9]

$$A = \frac{\xi_t \xi_r}{2}$$

In this case, the I-signal and the Q-signal are maintained to have the same frequency, but different in phase difference to have different signs when the object is moving in a direction approaching or receding from the Doppler radar sensor 400. The phase difference is theoretically 90 degrees, but alternates between positive and negative in accordance with the moving direction of the object. With this principle, the Doppler radar sensor 400 determines whether the object is moving in the approaching direction or the receding direction. In accordance with the signs of the frequency difference ωd, the respective signs of the I-signal and the Q-signal satisfy the following Expression.

[Expression 10]

$$\begin{cases} \omega_d > 0 \rightarrow I(t) = (+), Q(t) = (+) : case1 \\ \omega_d < 0 \rightarrow I(t) = (+), Q(t) = (-) : case2 \end{cases}$$

In both a first case where ωd is greater than 0 and a second case where ωd is smaller than 0, the I-signal has a sign of (+). However, the Q-signal has a sign of (+) in the first case but a sign of (-) in the second case.

If the waveforms of the I-signal and the Q-signal are represented on a two-dimensional space, the phase of the Q-signal "lags" the phase of the I-signal in the first case, but the phase of the Q-signal "lead" the phase of the I-signal in the second case.

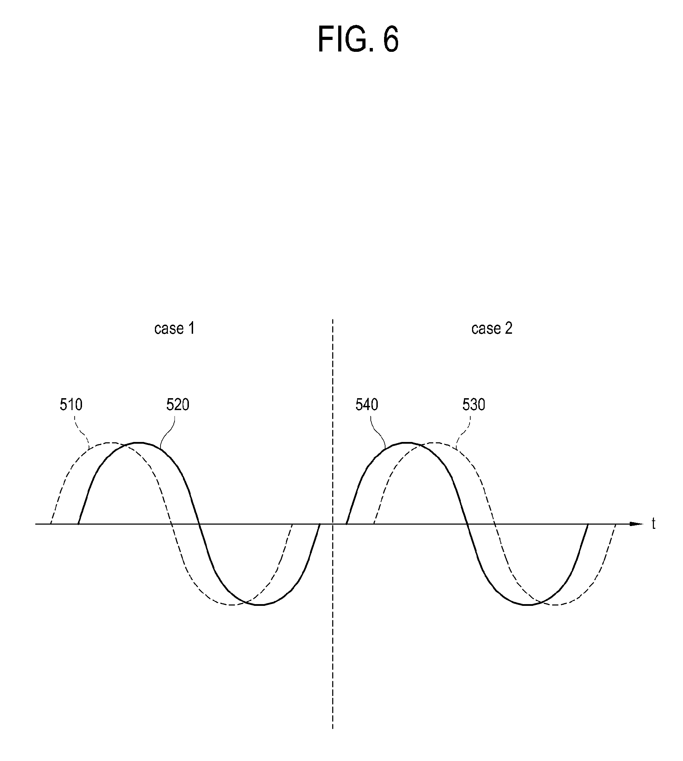

Below, meaning of "lag" and "lead" will be described with reference to FIG. 6.

FIG. 6 shows an example of comparatively illustrating a lag and a lead between phases of two signals. A first case and a second case shown in FIG. 6 are the same as those of the foregoing example. Further, the I-signal is represented with a dotted line, but the Q-signal is represented with a solid line.

FIG. 6 illustrates that the I-signal 510, 530 and the Q-signal 520, 540 oscillate along time axis. In each case, a relationship of phase between the I-signal 510, 530 and the Q-signal 520, 540 is as follows. In the first case, the I-signal 510 leads the Q-signal 520 with respect to time. On the other hand, in the second case, the I-signal 530 lags the Q-signal 540 with respect to time.

In other words, the phase of the Q-signal 520 is later than the phase of the I-signal 510 with respect to time in the first case, but the phase of the Q-signal 540 is earlier than the phase of the I-signal 530 with respect to time in the second case. That is, the phase of the Q-signal 520 "lags" the phase of the I-signal 510 in the first case, and the phase of the Q-signal 540 "leads" the phase of the I-signal 530 in the second case.

Referring back to the above Expression 10, the first case where the phase of the Q-signal 520 "lags" the phase of the I-signal 510 refers to that the object is moving in the direction of approaching the Doppler radar sensor 400. On the other hand, the second case where the phase of the Q-signal 540 "leads" the phase of the I-signal 530 refers to that the object is moving in the direction of receding from the Doppler radar sensor 400.

If ωd=0, it refers to that there is no substantive phase difference between the I-signal 510, 530 and the Q-signal 520, 540, and this state is called "in phase". If the frequency difference is 0, it may be regarded that the object is not moving but stationary.

Further, the amplitudes of the I-signal and Q-signal are varied depending on a distance between the moving object and the Doppler radar sensor 400, approximately in inverse proportion to a logarithmic value of the distance. In this regard, if the amplitude is greater than a preset threshold, it is determined that there is a moving object. Further, it is possible to determine the moving direction of the object based on the sign of the phase difference. Here, the amplitude A and the phase difference φ satisfy the following Expression.

[Expression 11]

$$A^2 = I^2(t) + Q^2(t)$$
$$\phi = \tan^{-1}\frac{Q(t)}{I(t)}$$

That is, by this Expression, if the calculated amplitude is greater than the threshold, it is primarily determined that the object is moving. Then, the moving direction of the object is secondarily determined in accordance with the sign of the calculated phase difference.

The I-signal and Q-signal actually output from the I-Q type Doppler radar sensor 400 have sine waveforms oscillating with respect to a time axis. To determine the amplitude of the oscillating waveform, the signal is processed by a smoothing process and compared with a certain threshold.

The smoothing process is to smooth a signal by diminishing or removing minute change, discontinuity or the like, which is an obstacle to analysis of data, if there is the minute change, discontinuity or the like due to rough sampling or noise. In light of processing a signal, the smoothing process is applied to change the oscillation waveform into a smoother waveform, thereby making it easy to analyze the data. If the oscillation of the signal is smooth enough to undergo the analysis, the smoothing process may be omitted. As an example of the smoothing process, there are a method of moving average, low pass filtering, etc.

The method of moving average is to remove irregularity of momentary change from data and sequentially calculate an arithmetic mean of individual values within a certain repetitive period, thereby determining a long-term change trend, i.e. trend change of the data. That is, the method of moving average is one of methods to determine a trend value of time series. The low pass filtering is a method of removing high frequency components from a signal.

However, while the Doppler radar sensor 400 is practically applied and used to a product, a variety of causes may make noise that interferes with a correct signal analysis.

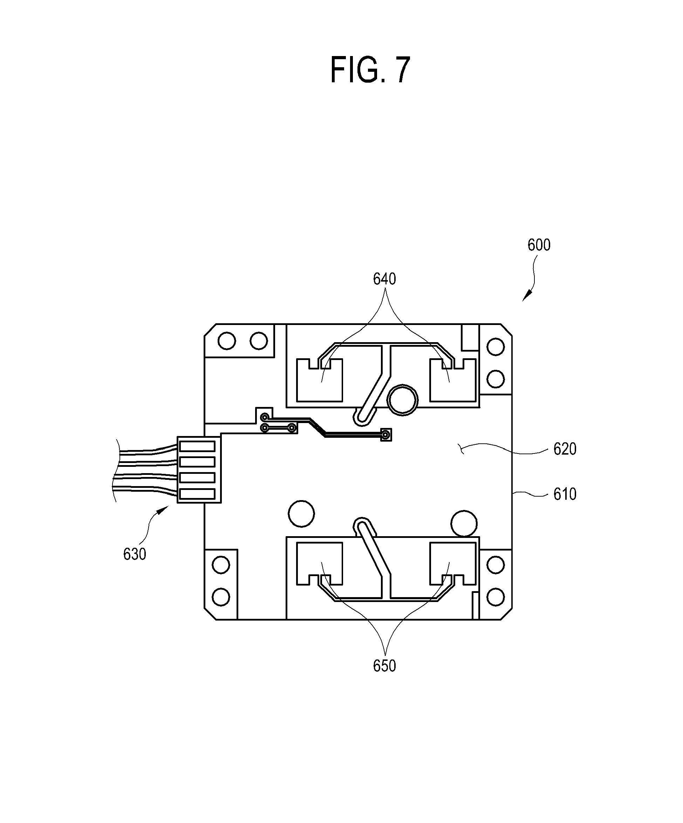

Noise may internally occur by a system due to various devices such as an oscillator, or externally occur by an external cause such as disturbance. The disturbance may be given in various forms, but a major cause of the disturbance is crosstalk between the transmission signal and the reception signal. Below, the crosstalk will be described with reference to FIG. 7.

FIG. 7 shows an example of a Doppler radar sensor 600.

As shown in FIG. 7, the Doppler radar sensor 600 includes a printed circuit board 610, a circuit portion 620 formed on the printed circuit board 610, a connector 630 connected to a main system such as the image processing apparatus 100 in order to supply power to the circuit portion 62 and transmit and receive a signal, a transmitter 640 to emit the transmission signal from the circuit portion 620 to the outside, and a receiver 650 to receive the reception signal from the outside and transmit the reception signal to the circuit portion 620.

The circuit portion 620 includes substantively the same elements as the oscillator 410, the first mixer 440, the phase shifter 450 and the second mixer 460 provided in the foregoing Doppler radar sensor 400 described with reference to FIG. 5.

Further, the transmitter 640 and the receiver 650 are the same as those of the foregoing Doppler radar sensor 400 described with reference to FIG. 5. Structurally, the transmitter 640 and the receiver 650 each include a 2-patch antenna including two metal nodes.

That is, the circuit portion 620 generates and emits a transmission signal through the transmitter 640, and generates and outputs the I-signal and the Q-signal based on the transmission signal and the reception signal through the connector 630 if the reception signal is received in the receiver 650. As described above, the image processing apparatus 100 determines a moving state of an object based on the I-signal and Q-signal output from the Doppler radar sensor 600.

Instead of outputting the I-signal and the Q-signal through the connector 630, the circuit portion 620 may include a determination circuit for determining a moving state of an object and output a determination result about the moving state of the object through the connector 630.

By the way, since the printed circuit board 610 is small and the RF signal generated in the circuit portion 620 has properties of high frequency, the RF signals of the transmitter 640 and the receiver 650 may interfere with each other even though the circuit portion 620 is designed by taking signal insulation into account. For example, the RF signal emitted from the transmitter 640 may be propagated to the receiver 650, or the RF signal received in the receiver 650 may be propagated to the transmitter 640. This phenomenon is called the crosstalk. If the crosstalk occurs, characteristics of the RF signal are naturally changed and it is thus difficult to make a correct sensed result.

Such a variety of noise such as the crosstalk causes the RF signal to be irregularly varied, thereby having a bad effect on the signal analysis. For example, noise may cause the Doppler radar sensor 600 to make a mistake of sensing that an object is stationary even though the object is actually moving, or sensing that an object is moving even though the object is actually stationary.

According to an exemplary embodiment, if noise or disturbance has a bad effect on the I-signal and the Q-signal in light of the signal analysis, the Doppler radar sensor 600 can make more accurate sensed results by excluding such a bad effect.

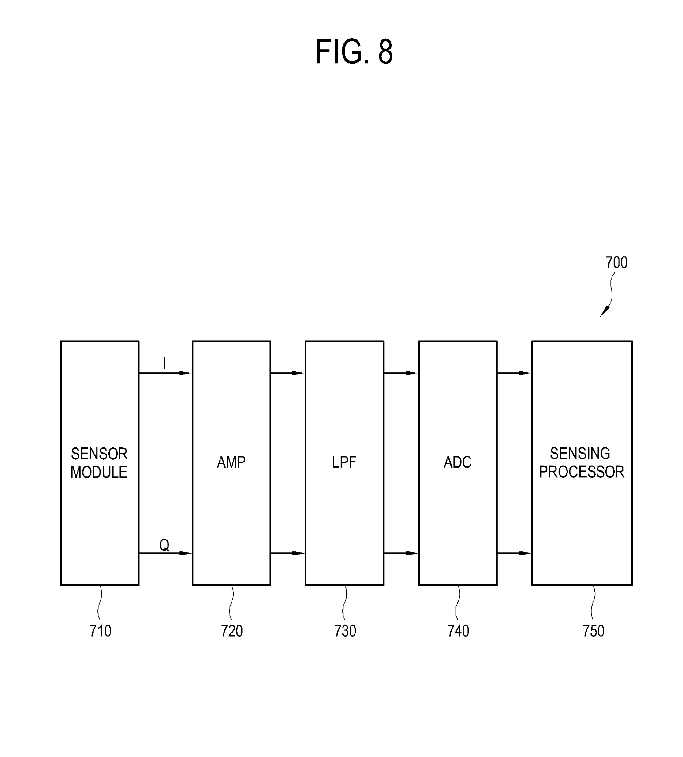

FIG. 8 is a block diagram of a sensor 700 according to an exemplary embodiment.

As shown in FIG. 8, the sensor 700 includes a sensor module 710 to output an I-signal and a Q-signal, an amplifier (AMP) 720 to amplify each signal, a low pass filter (LPF) 730 to filter off a high frequency component from each signal, an analog-to-digital converter (ADC) 740 to convert each signal from analog to digital, and a sensing processor 750 to determine a moving state of an object based on each signal.

According to an exemplary embodiment, the sensor 700 separately includes the sensing processor 750, but not limited thereto. In the sensor 700, the sensor module 710, the AMP 720 and the LPF 730 may be grouped into an analog processing block, and the ADC 740 and the sensing processor 750 may be grouped into a digital processing block. The analog processing block may be achieved by a hardware circuit, and the digital processing block may be achieved by a microcontroller unit (MCU) or another element provided in the image processing apparatus 100. For example, the sensor 700 may include only the sensor module 710, and the AMP 720, the LPF 730, the ADC 740 and the sensing processor 750 may be replaced by the processor (see '120' in FIG. 2) and the controller (see 170 in FIG. 2). In particular, the sensing processor 750 may be replaced by the controller (see 170 in FIG. 2).

The sensor module 710 serves to generate the RF signal, emit the transmission signal, receive the reception signal, and generate and output the I-signal and the Q-signal. The sensor module 710 may be achieved by the foregoing Doppler radar sensor (see '400' in FIG. 5 and '600' in FIG. 7), and thus detailed descriptions thereof will be avoided.

The AMP 720 amplifies the I-signal and Q-signal output from the sensor module 710 to a preset level. The I-signal and Q-signal output from the sensor module 710 are amplified for more precise and easier analysis since they are given on a relatively small scale.

The LPF 730 filters out a preset frequency band or higher from the I-signal and Q-signal. In this exemplary embodiment, the LPF 730 is placed at a back end of the AMP 720, but not limited thereto. Alternatively, the LPF 730 may be placed at a front end of the AMP 720. The reason why the LPF 730 filters out the high frequency band is as follows. A relatively much amount of system noise generated in the image processing apparatus 100 corresponds to a high frequency, but a relatively much amount of disturbance corresponds to a low frequency. Therefore, the LPF 730 filters out the high frequency band but passes the low frequency band, thereby eliminating the system noise.

The ADC 740 converts the I-signal and the Q-signal from analog to digital and outputs them to the sensing processor 750 so that the I-signal and the Q-signal can be analyzed.

The sensing processor 750 analyzes the digitalized I-signal and the Q-signal, and determines whether or not the object is moving and what direction the object moves in, with lapse of time. According to an exemplary embodiment, it is characterized that the sensing processor 750 excludes sensing errors due to system noise and disturbance while determining whether the object is moving or not.

As described above, the sensing processor 750 determines whether the object is moving or not based on the amplitudes of the I-signal and the Q-signal. The sensing processor 750 determines that the object is moving, if the amplitudes of the I-signal and the Q-signal caused by the moving object are equal to or higher than a certain threshold. Here, the sensing processor 750 does not compare each amplitude of the I-signal and Q-signal with the threshold, but generates a composition signal by combining or synthesizing the I-signal and the Q-signal in accordance with a preset expression and then compares the amplitude of the composition signal with the threshold. For convenience, the composition signal obtained by synthesizing the I-signal and the Q-signal will be called a C-signal.

A method or expression of synthesizing the I-signal and the Q-signal to generate the C-signal includes a normalization process. For example, the normalization process includes a signal envelop calculation, a norm calculation, etc.

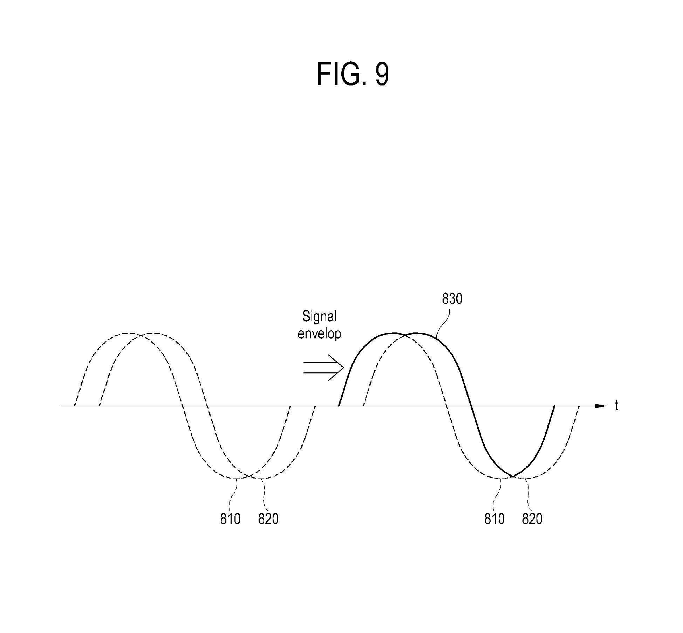

FIG. 9 shows an example of illustrating a principle of the signal envelope calculation;

As shown in FIG. 9, the signal envelop calculation is a method of taking a relatively high value between two signals 810 and 820 corresponding to points of time when there are two signals of the I-signal 810 and the Q-signal 820. In this exemplary embodiment, the C-signal thEnvelope generated by applying the signal envelope calculation to the I-signal 810 and the Q-signal 820 is represented by the following Expression.

[Expression 12]

$$th_{Envelop} = \max(abs(Q(t)), abs(I(t)))$$

where, the function of 'abs' returns an absolute value of an input value. That is, the foregoing Expression returns a relatively high value between the I-signal 810 and the Q-signal 820 in accordance with each point of time. Therefore, if the C-signal thEnvelop 830 calculated by the signal envelop calculation is represented in the form of waveforms, it is shown as a line connecting the upper outlines of the I-signal 810 and the Q-signal 820.

'norm' is a function for giving length or magnitude to vectors in a vector space according to linear algebra and functional analysis. A zero vector has a norm of '0', and all the other vectors have norms of positive real values. For example, 2-norm calculation and infinite-norm calculation for vector x=[x1, x2, ... ,xn] in a n-dimensional Euclidian space Rn satisfy the following Expression.

[Expression 13]

$$\| x \| = \sqrt{\sum_{i=1}^{n} |x_i|^2}$$
$$\| x \|_{\infty} = \max(|x_1|, |x_2|, ..., |x_n|)$$

In this exemplary embodiment, the C-signal th2-norm generated by applying the 2-norm calculation to the I-signal and Q-signal is represented by the following Expression.

[Expression 14]

$$th_{2-norm} = \sqrt{Q^2(t) + I^2(t)}$$

Such a C-signal generated by applying the normalization process to the I-signal and the Q-signal is processed by the method of moving average, the low pass filtering or the like smoothing method, and then finally compared with the threshold. That is, it may be determined that an object is moving in a time section where the amplitude of the C-signal propagating as time goes on is higher than the threshold.

However, as mentioned above, the amplitude of the C-signal may be higher than the threshold even when noise or disturbance affects the I-signal and the Q-signal in a time section. There are two reasons why the amplitude of the C-signal is higher than the threshold in a certain time section, one is the movement of the object, and the other is noise/disturbance.

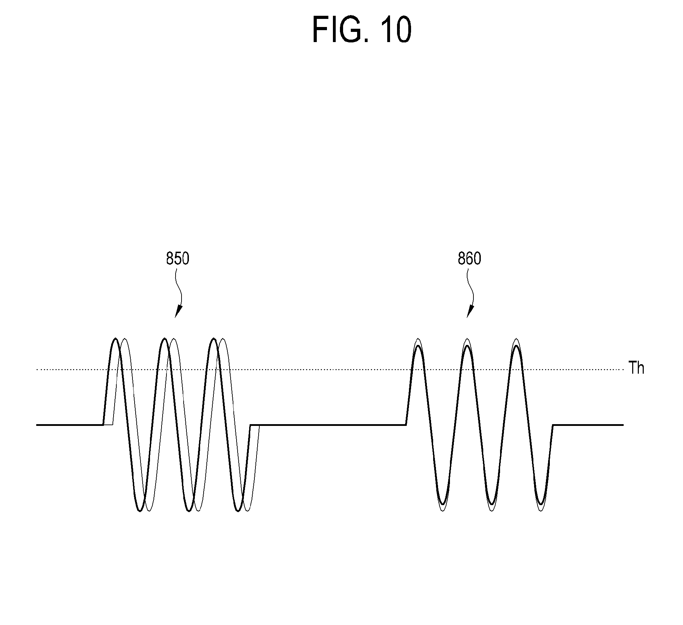

FIG. 10 shows an example of illustrating change in respective waveforms of the I-signal and the Q-signal due to movement of an object and disturbance;

FIG. 10 shows the waveforms of the I-signal and Q-signal with respect to time. A first case 850 and a second case 860 are all higher than a preset threshold Th, and it may be therefore determined that the movement of the object or the disturbance occurs in these time sections.

In the first case 850, a phase difference between the I-signal and the Q-signal is 90 degrees. If it is considered that the Q-signal is generated by shifting the phase of the transmission signal by 90 degrees and then mixing it with a reception signal, the first case is regarded as normal.

However, the second case 860 shows that the I-signal and the Q-signal have substantially the same phase difference with each other. Although an error range between the I-signal and the Q-signal due to the generation of the Q-signal is taken into account, the waveforms have to show a phase difference equal to or higher than a preset value. However, there is no substantial phase difference between the I-signal and the Q-signal, unintended causes may intervene. Accordingly, as described above, there is noise or disturbance.

In this regard, the image processing apparatus 100 according to an exemplary embodiment operates by the following methods.

The image processing apparatus 100 specifies a time section where the preset characteristics of the transmission signal and the reception signal are satisfied, and determines whether an object is moving in the specified time section based on whether there is distortion in the phase difference between the transmission signal and the reception signal within the time section satisfying these signal characteristics. If the phase difference between the transmission signal and the reception signal is smaller than a preset threshold, the image processing apparatus 100 determines that there is distortion in the phase difference between the transmission signal and the reception signal, and thus determines that the object is not moving.

In this exemplary embodiment, the time section is specified to determine the distortion of the phase difference, but not limited thereto. For example, the image processing apparatus 100 may determine whether the signal characteristics are satisfied in units of time and determine whether the phase difference is distorted or not.

As a detailed method for determining whether the phase difference between the transmission signal and the reception signal is distorted, the image processing apparatus 100 may mix the transmission signal and the reception signal into the I-signal, mix the transmission signal shifted in phase and the reception signal into the Q-signal, and determine whether preset signal characteristics of the I-signal and Q-signal are satisfied in the corresponding time section. To determine whether the signal characteristic is satisfied, it is determined whether or not the amplitude of the C-signal obtained by applying the normalization process to the I-signal and the Q-signal is higher than the preset threshold. This threshold is different from the threshold related to the phase difference between the transmission signal and the reception signal.

If the corresponding signal characteristic is satisfied, the image processing apparatus 100 determines whether an object is moving in the corresponding time section based on the phase difference between the I-signal and the Q-signal in the corresponding time section. That is the image processing apparatus 100 determines a normal case where the object moving if the phase difference between the I-signal and the Q-signal is substantially 90 degrees or higher than a preset value. On the other hand, the image processing apparatus 100 determines an abnormal case due to disturbance if the phase difference between the I-signal and the Q-signal is substantially 0 or smaller than the preset value.

Thus, the image processing apparatus 100 excludes signal distortion due to noise or disturbance while determining whether an object is moving or not, thereby improving accuracy of sensed results.

By the way, if characteristics of a signal are taken into account, it may be difficult to directly calculate the phase difference in practice. Theoretically, the phase difference between the I-signal and the Q-signal has to be 90 degrees in a normal case. However, in practice, the two signals are different in amplitude, DC offset and waveform from each other due to noise/disturbance.

The DC offset refers to that various errors in hardware or software for processing the signal cause a signal to have a waveform different from that expected when it is designed in practice. For example, the signal is expected to have an initial amplitude of '0' when it is designed, but the actual amplitude may be not '0'. Thus, compensation considering these errors is needed while the signal is processed.

As a method of calculating a phase of a signal, there may be used fast Fourier transform (FFT), a technique of using an arctangent function, etc. The technique of using the arctangent function has been explained in the foregoing Expression 11. The FFT based on Fourier transform has been proposed for quick calculation by removing repetitive calculations to reduce the number of calculations when discrete Fourier transform is calculated using approximation formula.

The FFT can more accurately calculate frequency and phase. However, a microcontroller-unit (MCU) or digital signal processing (DSP) capable of performing a quick calculation are needed to use the FFT. This inevitably leads to increase of costs when a product is realized. Accordingly, if the image processing apparatus 100 is a home appliance such as a television (TV) or the like that has a limited system resource, the arctangent function is more advantageous than the FFT.

To use the arctangent function for calculating an accurate phase difference between two signals, the two signals have to have exactly the same shape and exactly the same DC offset. However, in practice, various numerical errors occur since a signal is mixed with a variety of noise. Therefore, if the phase difference is dimply calculated by applying the arctangent function to the signal mixed with noise, a calculation result may have a problem in reliability.

Thus, the image processing apparatus 100 according to an exemplary embodiment operates as follows.

The image processing apparatus 100 generates a new signal, i.e. a differential (D)-signal based on difference between the I-signal and the Q-signal, and determines the phase difference in a certain time section in accordance with whether the D-signal is higher than the threshold in the corresponding time section. The preset threshold described herein is different from the foregoing threshold related to the C-signal. Each of the thresholds is determined based on data accumulated by experiments under various environments, and thus not limited to detailed numerals.

Here, the difference between the I-signal and the Q-signal refers to difference in amplitude according to points of time. Further, that the D-signal is higher than the preset threshold indicates that the amplitude of the D-signal is higher than the corresponding the threshold.

If the D-signal is higher than the threshold, the image processing apparatus 100 determines that the phase difference between the I-signal and the Q-signal is equal to or higher than a certain value, thereby determining that an object is moving. On the other hand, if the D-signal is not higher than the threshold, the image processing apparatus 100 determines that the phase difference between the I-signal and the Q-signal is lower than the certain value, thereby determining that the object is not moving but disturbance occurs.

Accordingly, the image processing apparatus 100 can easily determine the phase difference between the I-signal and the Q-signal through a limited system resource.

To generate the D-signal based on the difference between the I-signal and the Q-signal, various mathematical techniques may be used. For example, these mathematical techniques may include a differential of the Q-signal from the I-signal, a differential of the I-signal from the Q-signal, an absolute value of the differential between the I-signal and the Q-signal, the differential between the I-signal and the Q-signal to the power of n, etc. Here, n is an integer greater than '0', usually n=2. Of course, each technique needs an individual threshold for comparison. These techniques can be represented by the following Expression.

[Expression 15]

$$th_{dffr1}(t) = I(t) - Q(t)$$
$$th_{dffr2}(t) = Q(t) - I(t)$$
$$th_{dffr3}(t) = |I(t) - Q(t)|$$
$$th_{dffr4}(t) = (I(t) - Q(t))^n$$

As mentioned above, if disturbance occurs, the phase difference is not substantially exhibited even though the amplitudes of the I-signal and the Q-signal is higher than the threshold th (see '860' in FIG. 10). That is, the lead or the lag is exhibited when the I-signal and the Q-signal are normal, but the in-phase is exhibited when the I-signal and the Q-signal are abnormal. If the I-signal and the Q-signal are in phase, the difference in amplitude between the I-signal and the Q-signal is substantially 0 or a very tiny value.

Therefore, the D-signal is generated by the foregoing expression and compared with a preset threshold, and it is thus possible to determine whether there is a substantial phase difference or no difference between the I-signal and the Q-signal. Even in this case, if the analysis is not easy due to excessive oscillation of the D-signal, the D-signal may be smoothed and then compared with the threshold.

Below, operations of the control method according to an exemplary embodiment will be described.

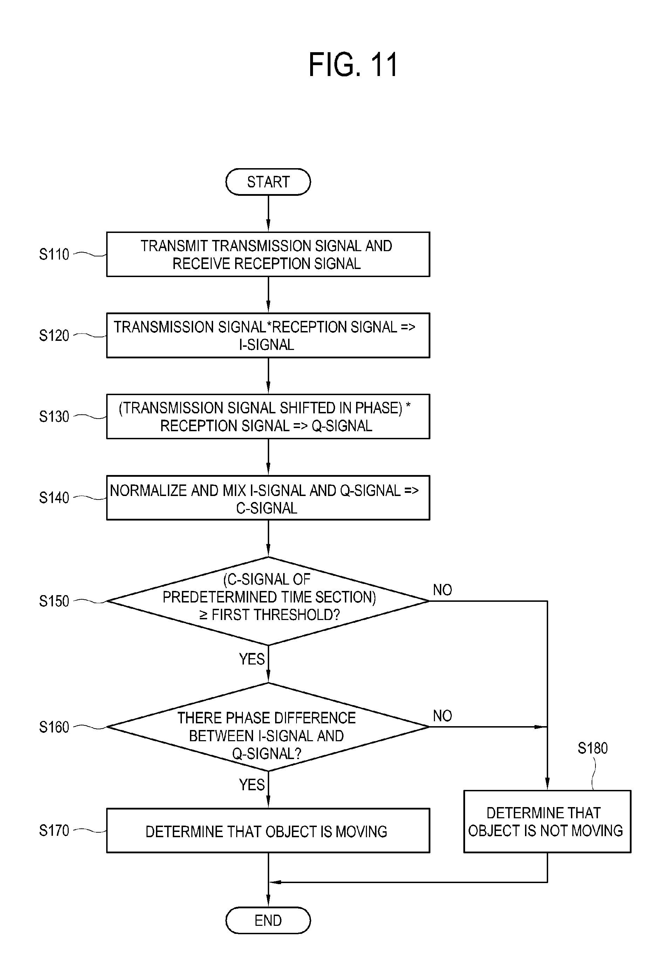

FIG. 11 is a flowchart of showing a process that the image processing apparatus 100 determines whether the object is moving or not.

As shown in FIG. 11, at operation S110, the image processing apparatus 100 emits a transmission signal to an object and receives a reception signal reflected from the object.

At operation s120, the image processing apparatus 100 mixes the transmission signal and the reception signal to generate an I-signal. At operation S130, the image processing apparatus 100 shifts the phase of the transmission signal by 90 degrees and then mixes it with the reception signal to generate a Q-signal.

At operation S140, the image processing apparatus 100 mixes the I-signal and the Q-signal through normalization and then smooths, thereby generating a C-signal.

At operation S150, the image processing apparatus 100 determines whether the C-signal is higher than a preset first threshold in a certain time section.

If it is determined at the operation S150 that the C-signal is higher than the first threshold in the corresponding time section, at operation S160 the image processing apparatus 100 determines whether there is a phase difference between the I-signal and the Q-signal.

If it is determined at the operation S160 that there is a substantial phase difference between the I-signal and the Q-signal, i.e. that there is a lead or lag between the I-signal and the Q-signal, at operation S170 the image processing apparatus 100 determines that the object is moving in the corresponding time section.

On the other hand, if it is determined at the operation S160 that there no substantial phase difference between the I-signal and the Q-signal, i.e. that the I-signal and the Q-signal are in phase, at operation S180 the image processing apparatus 100 determines that the object is not moving in the corresponding time section.

On the other hand, if it is determined at the operation S150 that the C-signal is not higher than the first threshold in the corresponding time section, at operation S180 the image processing apparatus 100 determines that the object is not moving in the corresponding time section.

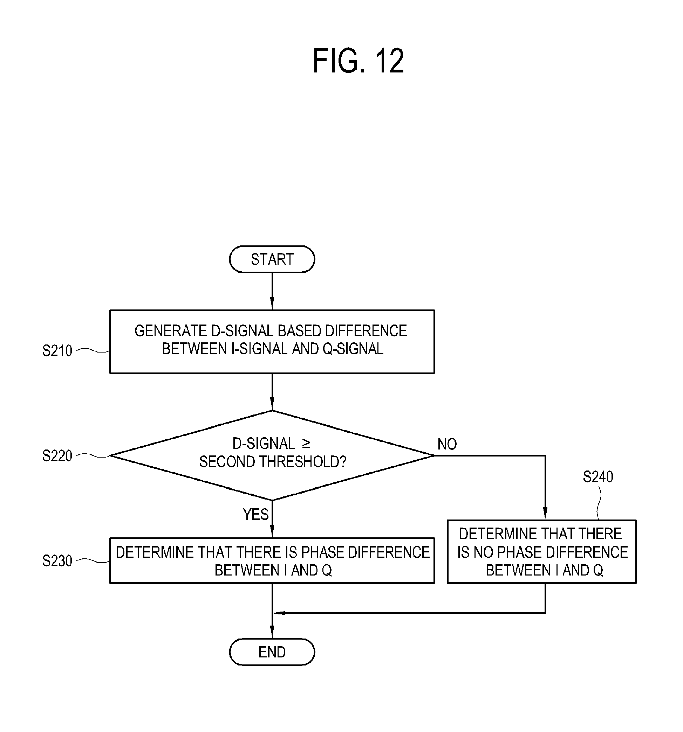

FIG. 12 is a flowchart of showing a process that the image processing apparatus 100 determines a phase difference in order to determine whether the object is moving or not. This flowchart shows details of the foregoing operation S160 of FIG. 11.

As shown in FIG. 12, at operation S210 the image processing apparatus 100 generates a D-signal based on difference between the I-signal and the Q-signal.

At operation S220, the image processing apparatus 100 determines whether the D-signal is higher than a preset second threshold.

If it is determined at the operation S220 that the D-signal is higher than the second threshold, at operation S230 the image processing apparatus 100 determines that there is a substantial phase difference between the I-signal and the Q-signal, i.e. that there is a lead or lag between the I-signal and the Q-signal.

On the other hand, if it is determined at the operation S220 that the D-signal is not higher than the second threshold, at operation S240 the image processing apparatus 100 determines that there is no substantial phase difference between the I-signal and the Q-signal, i.e. that the I-signal and the Q-signal are in phase.

Below, exemplary embodiments will be described based on experimental data. Since the following exemplary embodiments are given through relative comparison, details of experimental conditions are not specified.

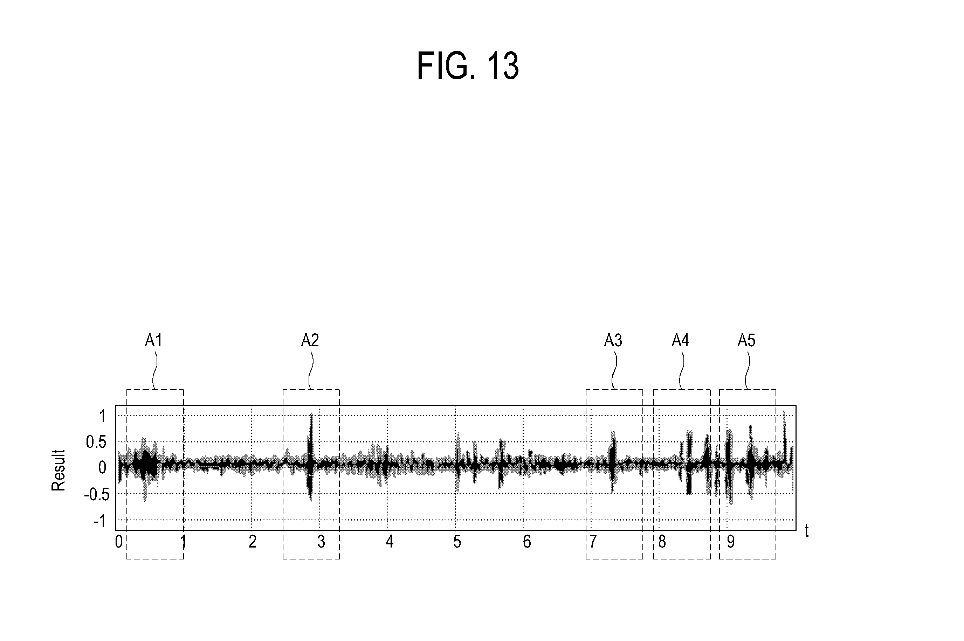

FIG. 13 is a graph of illustrating the respective waveforms of the I-signal and the Q-signal derived from experimental results according to an exemplary embodiment;

As shown in FIG. 13, the I-signal and the Q-signal have waveforms in as time goes on. The horizontal axis represents time in units of seconds. The vertical axis represents amplitude, in which units are not considered in this exemplary embodiment since normalization is applied for the relative comparison. This condition is equally applied to subsequent graphs.

In this graph, the I-signal and Q-signal are respectively shown, but not distinguishably shown since a graph scale is small. First, only the amplitude will be taken into account without distinguishing between the I-signal and the Q-signal.

Regarding the amplitude, the I-signal and the Q-signal have relatively high oscillation in a time section A1 of 0 to 1 second, a time section A2 around 3 seconds, a time section A3 of 7 to 8 seconds, a time section A4 of 8 to 9 seconds, and a time section A5 around 9 seconds. In other words, it is regarded that an object moves or disturbance occurs during these time sections A1 through A5.

In this experiment, the object actually moves only in the time section A1, and does not move in the other time sections A2 through A5. Since the time section A2 through A5 correspond to are error detections, it is important to detect only the time section A1.

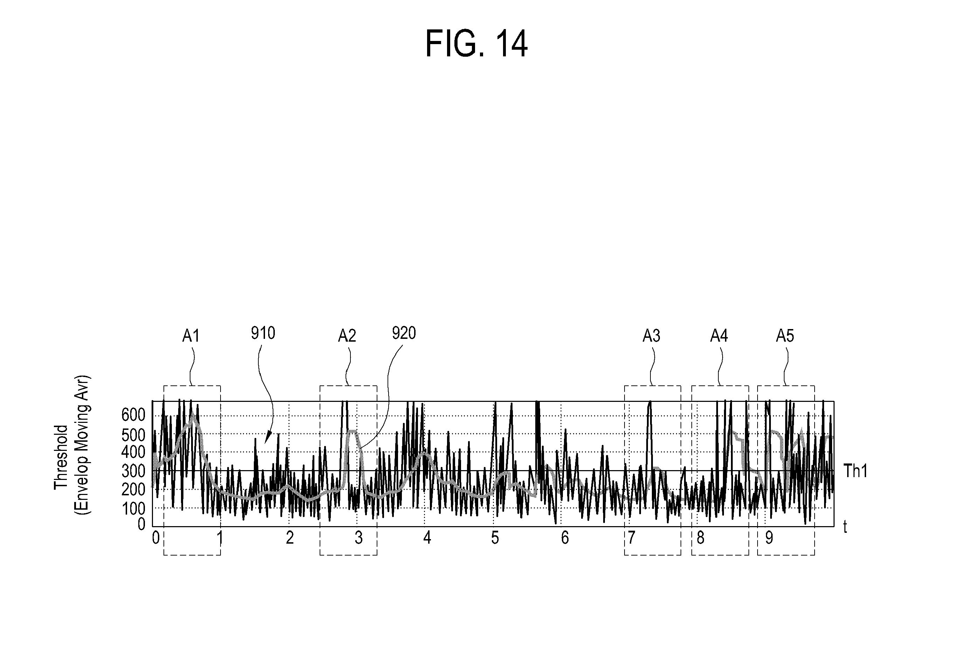

FIG. 14 is a graph of illustrating a waveform of a C-signal based on the I-signal and the Q-signal shown in FIG. 13.

As shown in FIG. 14, a first waveform 910 is a waveform of the C-signal generated by applying the normalization to the I-signal and the Q-signal shown in FIG. 13. The first waveform 910 of the C-signal is generated by applying the signal envelop calculation processing to the I-signal and the Q-signal. By the way, it is not easy to compare the first waveform 910 with a first threshold Th1 because the first waveform 910 oscillates excessively. Therefore, the first waveform 910 is smoothed into a second waveform 920 and then compared with the first threshold Th1.

In the time section A1 corresponding to a normal case, the second waveform 920 is higher than the first threshold Th1. However, the second waveform 920 is higher than the first threshold Th1 even in the time sections A2, A4 and A5. Accordingly, it is understood that the analysis based on the amplitude of the C-signal cannot exclude abnormal cases.

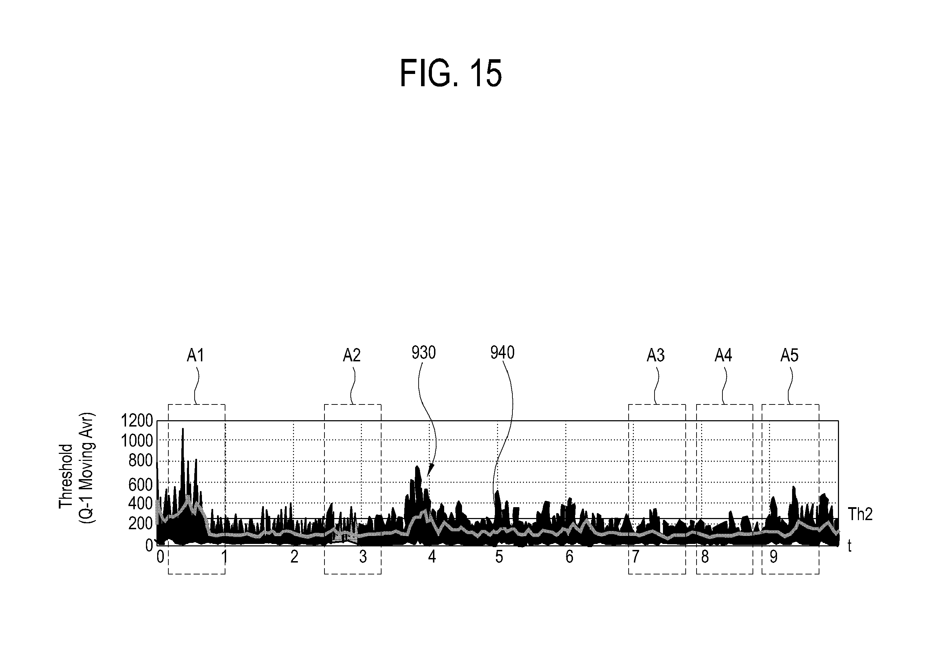

FIG. 15 is a graph of illustrating a waveform of a D-signal based on the I-signal and the Q-signal shown in FIG. 13.

As shown in FIG. 15, a third waveform 930 is a waveform of the D-signal generated based on the difference between the I-signal and the Q-signal shown in FIG. 13, and a fourth waveform 940 is a waveform obtained by smoothing the third waveform 930. Here, the third waveform 930 is derived based on thdffr3(t) of the foregoing Expression 15.

In comparison between the fourth waveform 940 and the second threshold Th2, the amplitude of the fourth waveform 940 is higher than that of the second threshold Th2 in the time section A1. On the other hand, the amplitude of the fourth waveform 940 is lower than that of the second threshold Th2 in the other time sections A2 through A5. On the contrary to the graph of FIG. 14, it is understood that the analysis based on the amplitude of the D-signal can distinguish between a normal case and an abnormal case and exclude the abnormal case.

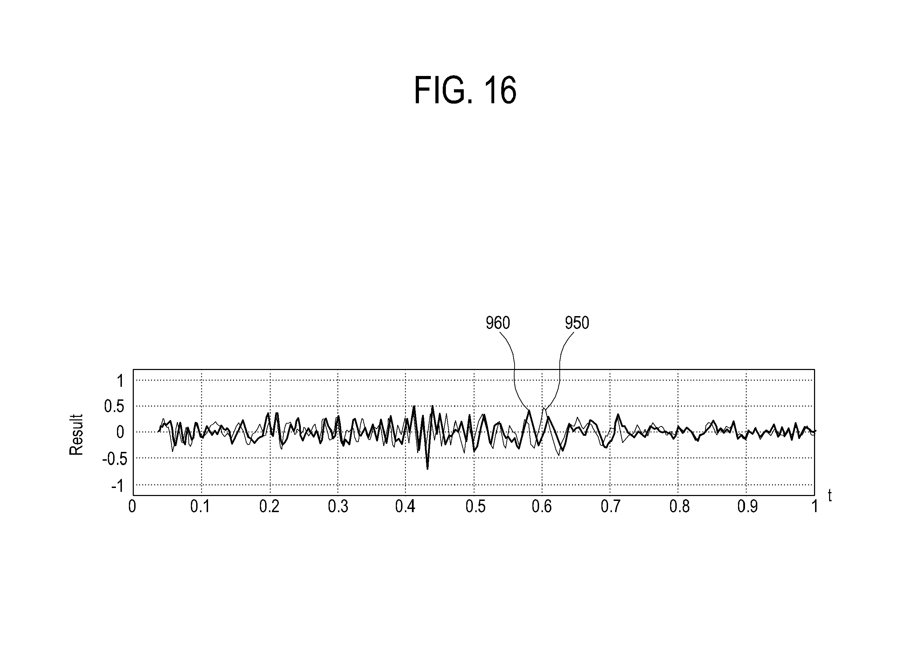

FIG. 16 is a graph where a time section A1 of FIG. 13 is enlarged.

As shown in FIG. 16, the time section A1 corresponding to the normal case exhibits a phase difference between an I-signal 950 and a Q-signal 960. Of course, as described above, the waveform of the I-signal 950 and the waveform of the Q-signal 960 are not exactly matched with each other because of many causes such as the DC offset or the like, and the phase difference between the two waveforms is not uniform as time goes on. However, it will be appreciated that the phase difference is clearly exhibited between the I-signal 950 and the Q-signal 960 around the time section of 0.5 to 0.6 seconds where the amplitude largely oscillates.

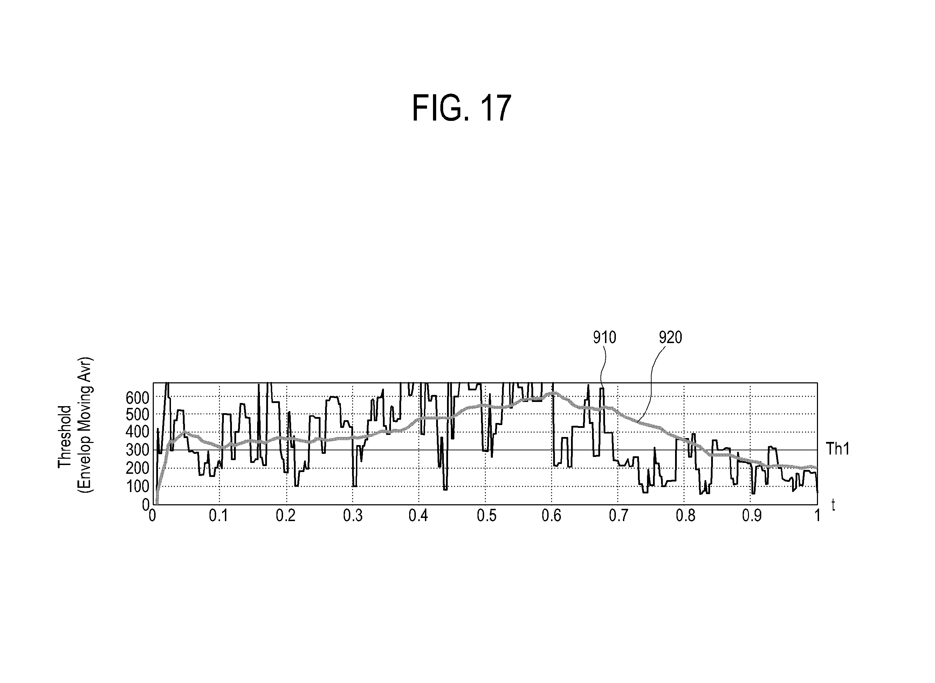

FIG. 17 is a graph where a time section A1 of FIG. 14 is enlarged;

As shown in FIG. 17, the second waveform 920 obtained by smoothing the first waveform 910 of the C-signal is higher than the first threshold Th1 around the time section of 0.5 to 0.6 seconds where the amplitude oscillates largely. Further, the second waveform 920 is dropped below the first threshold Th1 from around 0.9 seconds, and thus it will be appreciated that the object does not move from this point of time.

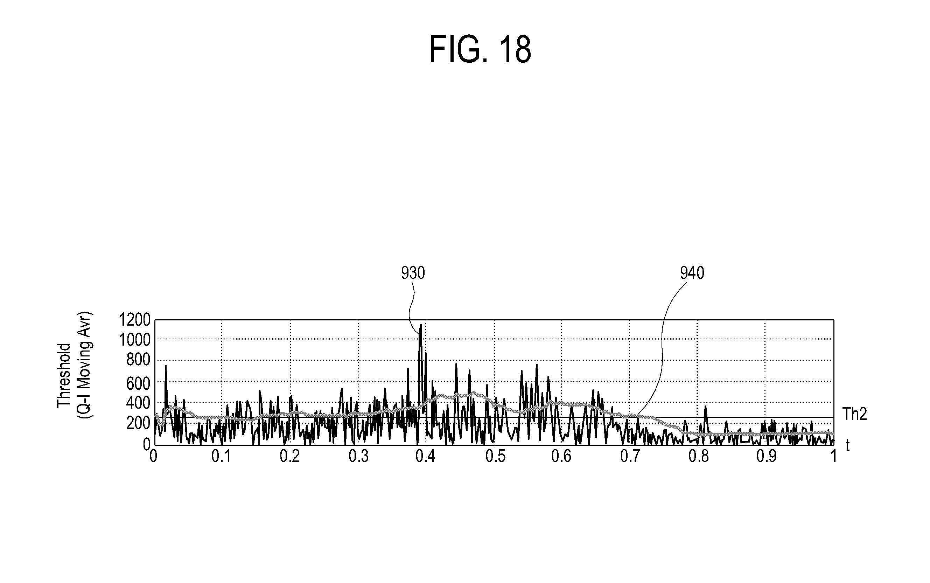

FIG. 18 is a graph where a time section A1 of FIG. 15 is enlarged.

As shown in FIG. 18, the fourth waveform 940 obtained by smoothing the third waveform 930 of the D-signal is also higher than the second threshold Th2 around the time section of 0.5 to 0.6 seconds where the amplitude oscillates largely. Further, the fourth waveform 940 is dropped below the second threshold Th2 from around 0.9 seconds, and thus it will be appreciated that the object does not move from this point of time.

That is, in the normal case caused by the movement of the object, it is possible to determine whether the object is moving or not based on the comparison with the threshold Th1, Th2 since the amplitude is noticeably varied in both FIG. 17 showing the C-signal and FIG. 18 showing the D-signal.

On the other hand, description about the abnormal case due to disturbance is as follows.

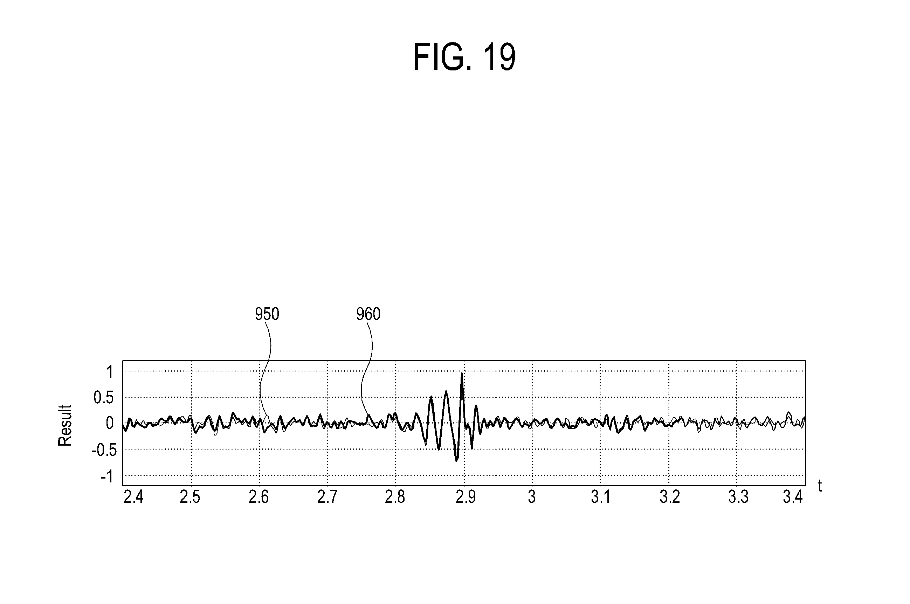

FIG. 19 is a graph where a time section A2 of FIG. 13 is enlarged.

FIG. 19 illustrates the I-signal 950 and the Q-signal 960 along the time axis. On the contrary to the case of FIG. 16, there is little phase difference between the I-signal 950 and the Q-signal 960. In particular, around 2.9 seconds where the amplitude oscillates largely, the phase of the I-signal 950 is almost aligned with the phase of the Q-signal 960. That is, it will be appreciated that the phase difference between the I-signal 950 and the Q-signal 960 is substantially '0'.

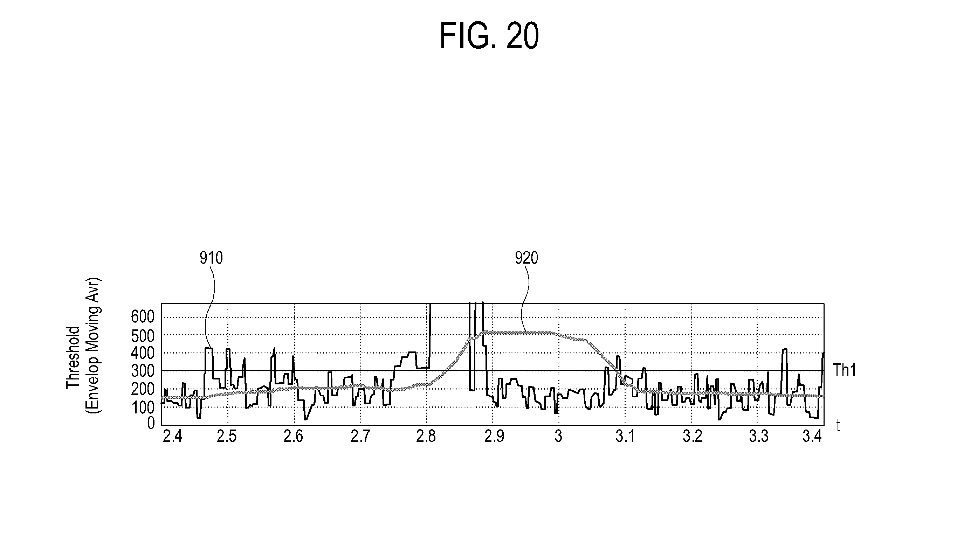

FIG. 20 is a graph where a time section A2 of FIG. 14 is enlarged.

As shown in FIG. 20, the second waveform 920 obtained by smoothing the first waveform 910 of the C-signal has the amplitude higher than the first threshold Th1 around 2.9 seconds where the amplitude oscillates largely. Since the time section A2 corresponds to the abnormal case where the object is not moving and there is disturbance, the analysis of the C-signal cannot distinguish between the normal case and the abnormal case.

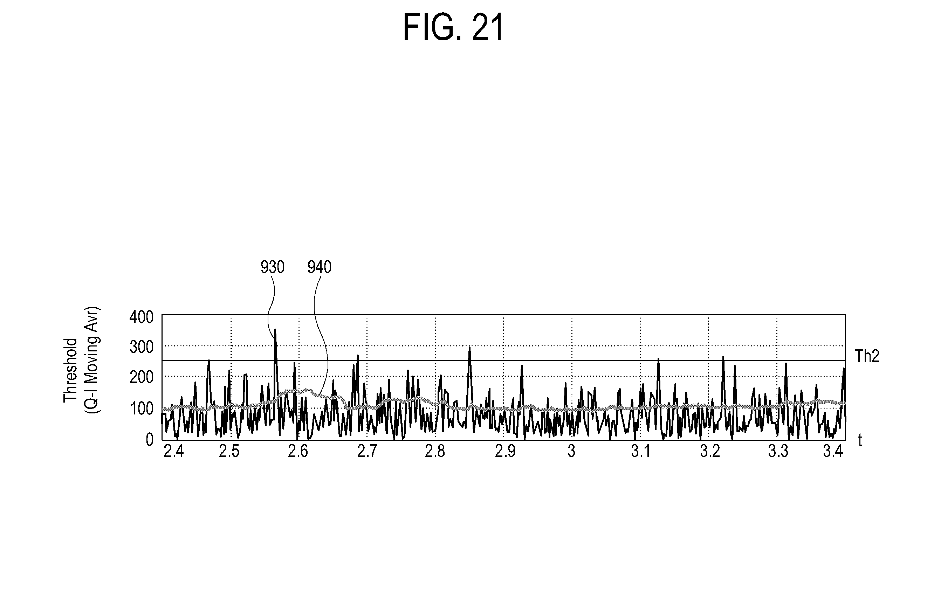

FIG. 21 is a graph of enlarging a time section A2 of FIG. 15 is enlarged.

As shown in FIG. 21, the fourth waveform 940 obtained by smoothing the third waveform 930 of the D-signal has the amplitude lower than the second threshold Th2 around 2.9 seconds where the amplitude largely oscillates. That is, there is no substantial phase difference even though the amplitude oscillates largely in the time section A2, and it is therefore determined that the large oscillation of the amplitude is caused by not the movement of the object but the disturbance.

Therefore, the analysis of the D-signal can distinguish and exclude the abnormal case.

In the foregoing exemplary embodiments, the image processing apparatus 100 such as a TV or a set-top box is described, but not limited thereto. Alternatively, the detection and analysis described in the foregoing exemplary embodiment may be applied to various electronic devices that perform functions unrelated to the image processing function of the image processing apparatus 100.

In addition, the foregoing exemplary embodiments describe the element such as the Doppler radar sensor for the detection and analysis is installed in the image processing apparatus 100, but not limited thereto.

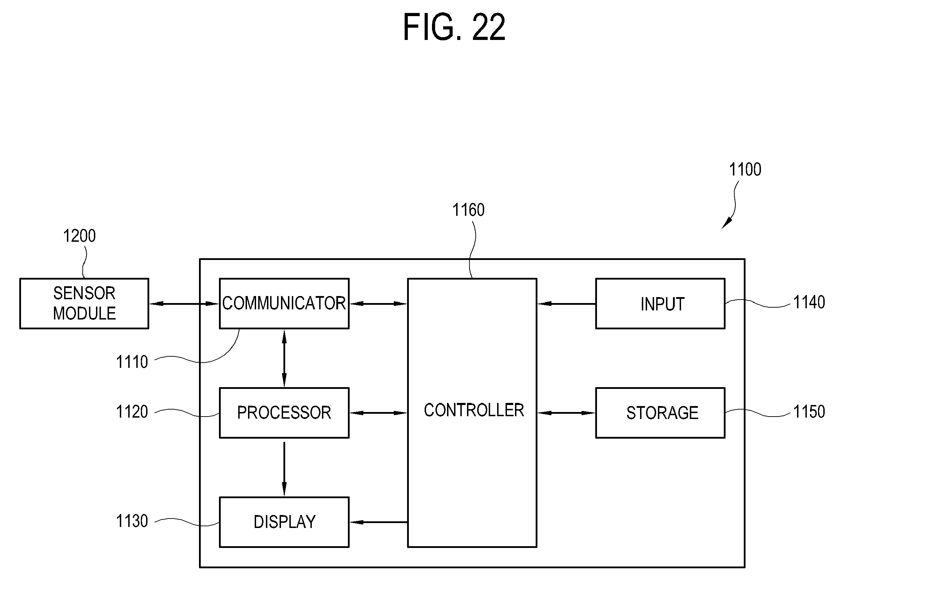

FIG. 22 is a block diagram of an image processing apparatus 1100 according to an exemplary embodiment.

As shown in FIG. 22, the image processing apparatus 1100 includes a communicator 1110, a processor 1120, a display 1130, an input 1140, a storage 1150, and a controller 1160. These elements of the image processing apparatus 1100 have the same basic functions as those shown in FIG. 2, and thus repetitive descriptions thereof will be avoided.

A sensor module 1200 has a structure of an I-Q type Doppler radar sensor, and operates by the same structures and principles as described above. The sensor module 1200 is separated from the image processing apparatus 1100, and transmits information for determining a moving state of an object or a result from determining the moving state of the object to the communicator 1110.

The sensor module 1200 may generate just the I-signal and the Q-signal to the communicator 1110. In this case, the controller 1160 determines whether an object is moving or not based on the I-signal and the Q-signal received in the communicator 1110, and operates corresponding to the determination results.

Further, the sensor module 1200 does not only generate the I-signal and the Q-signal, but also determines whether the object is moving or not based on these signals and transmits the determination result to the communicator 1110. In this case, the controller 1160 performs operations corresponding to the determination results received in the communicator 1110.

In one or more exemplary embodiments, the sensor provided in the image processing apparatus includes the Doppler radar sensor. However, in accordance with design of the image processing apparatus, the sensor may include various kinds of sensors such as an infrared sensor besides the Doppler radar sensor, i.e. Doppler sensor. Accordingly, the image processing apparatus may be achieved by combining different kinds of sensors.

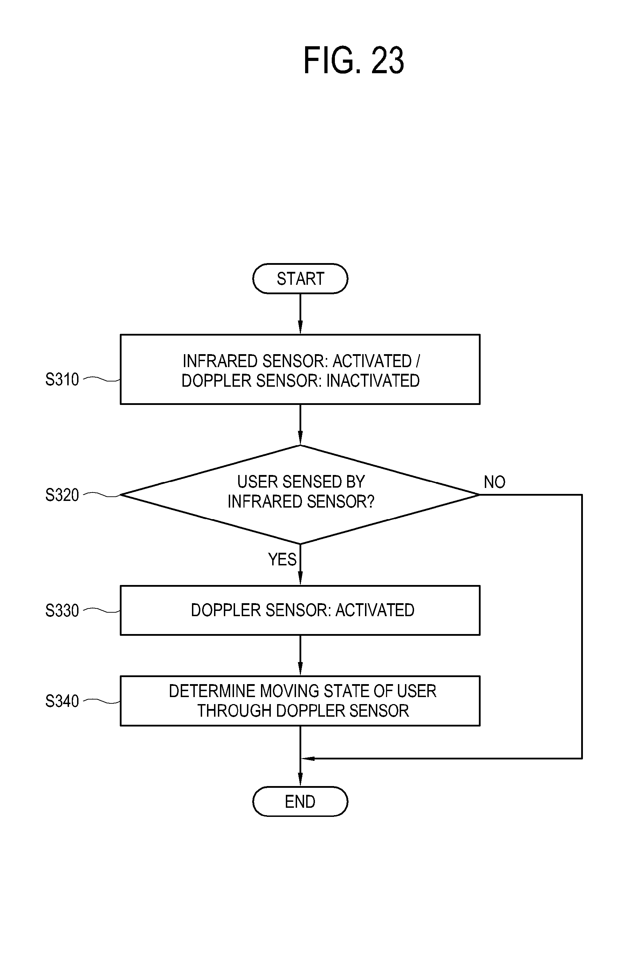

For example, the Doppler sensor consumes relatively high power in generating a high frequency, and thus it may be undesirable in light of saving power if the Doppler sensor is continuously activated to generate the high frequency. If the Doppler sensor is activated in the case where there is no one else that there is no one else around, it may be a waste of energy. In this case, the image processing apparatus uses the infrared sensor that consumes relatively low power, thereby saving power to be consumed by the activation of the Doppler sensor. In this regard, a related exemplary embodiment will be described with reference to FIG. 23.

FIG. 23 is a flowchart of illustrating a control method of an image processing apparatus according to an exemplary embodiment. In this exemplary embodiment, the image processing apparatus includes the Doppler sensor and the infrared sensor.

Referring to FIG. 23, at operation S310 the image processing apparatus activates the infrared sensor and inactivates the Doppler sensor. As the infrared sensor is activated, at operation S320 the image processing apparatus determines whether the infrared sensor senses a user in an external environment.

If it is determined at the operation S320 that the infrared sensor senses a user, at operation S330 the image processing apparatus activates the Doppler sensor. In addition, the image processing apparatus may inactivate the infrared sensor or keep activating the infrared sensor in the operation S330.

At operation S340, the image processing apparatus uses the Doppler sensor to determine a moving state of a user. This may be achieved by the foregoing exemplary embodiments.

On the other hand, if it is determined at the operation S320 that the infrared sensor senses no user, the image processing apparatus maintains a current state and continues monitoring through the infrared sensor.

Hence, it is possible to reduce the power consumed in the Doppler sensor.

The Doppler radar sensor described in the foregoing exemplary embodiment, in particular, the sensor module shown in FIG. 7 may be installed at various positions of the display apparatus. Below, various methods of installing the sensor module will be described.

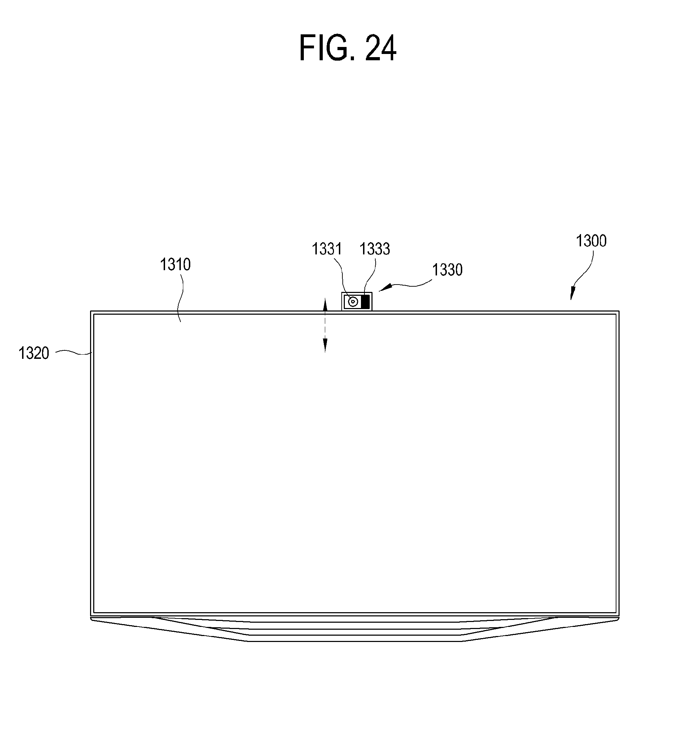

FIG. 24 shows an example of installing a Doppler radar sensor 1333 according to an exemplary embodiment.

As shown in FIG. 24, a display apparatus 1300 includes a display 1310 including a display panel in a front side, a bezel 1320 surrounding and supporting four edges of the display 1310, and a sensor unit 1330 installed on a top of the bezel 1320.

The bezel 1320 covers the rear of the display 1310 and couples with a rear cover (not shown) in which the display 1310 is accommodated.

The sensor unit 1330 may be installed to have a fixed position on the top of the bezel 1320 or be movable between a use position where it is exposed to the top of the bezel 1320 and a standby position where it is accommodated in the bezel 1320. The sensor unit 1330 may move between the use position and the standby position by a manual operation of a user or by an actuating structure provided in the display apparatus 1300 when a user operates a remote controller (not shown).

The sensor unit 1330 includes one or more various sensor modules, for example, a camera 1331 and the Doppler radar sensor 1333. Besides, the sensor unit 1330 may include various kinds of sensor modules such as the infrared sensor. If the sensor unit 1330 includes two or more sensor modules, the sensor modules are spaced apart from each other to avoid interference therebetween. For example, the Doppler radar sensor 1333 of the sensor unit 1330 is arranged in parallel with a camera 1331 not to interfere with the camera 1331.

However, the method of installing the Doppler radar sensor to the display apparatus is not limited to the foregoing example, and may be achieved variously.

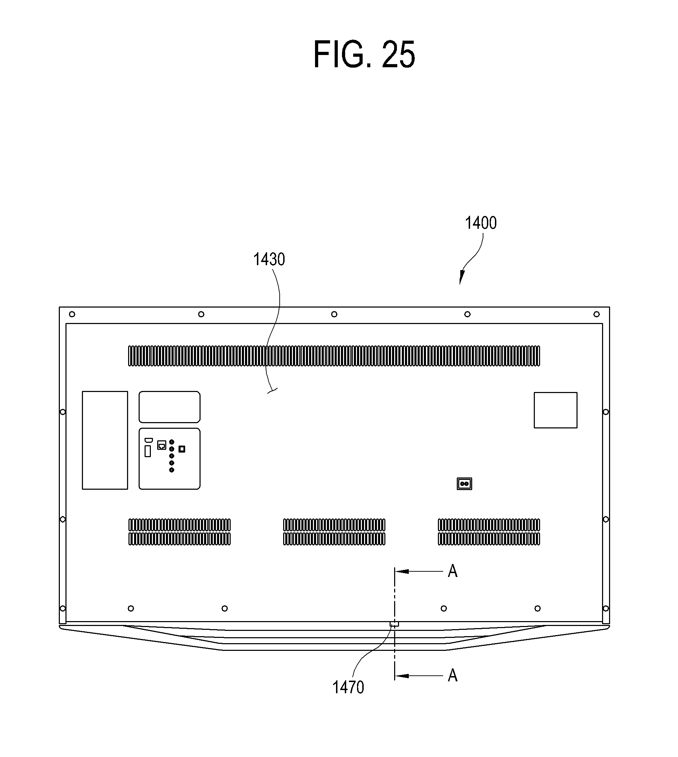

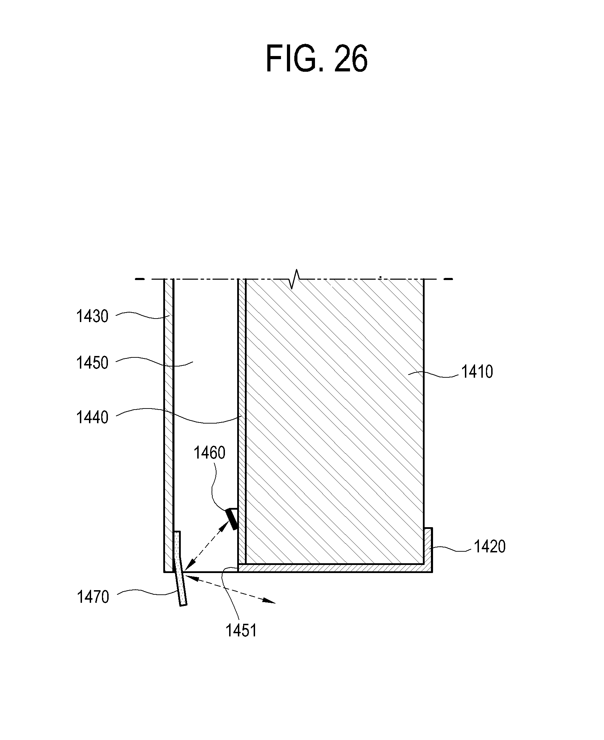

FIG. 25 shows an example of illustrating a rear of a display apparatus 1400 according to an exemplary embodiment, and FIG. 26 is a cross-section view of the display apparatus of FIG. 25, taken along line A-A.

As shown in FIG. 25 and FIG. 26, the display apparatus 1400 includes a display 1410 including a display panel, a bezel 1420 supporting four edges of the display 1410, a rear cover 1430 covering the rear of the display 1410, and a support frame 1440 supporting the rear of the display 1410 within the rear cover 1430. A predetermined gap between the support frame 1440 and the rear cover 1430 forms an accommodating space 1450, and thus components of the display apparatus 1400 such as an image processing board (not shown) are accommodated in this accommodating space 1450.

A Doppler radar sensor 1460 is installed at a lower side of the support frame 1440. In general, the support frame 1440 includes a metallic substance, and it is therefore not easy for a wireless signal to pass through the support frame 1440. Hence, an opening 1451 is formed on the bottom of the accommodating space 1450, so that the transmission signal can be transmitted from the Doppler radar sensor 1460 to the outside through the opening 1451 and the reception signal reflected from an external user can be received in the Doppler radar sensor 1460 through the opening 1451. The Doppler radar sensor 1460 is installed in the support frame 1440 in such a manner that its surface for transmitting and receiving the wireless signal is inclined toward the opening 1451 in order to easily transmit and receive the wireless signal.

By the way, an object to be sensed by the Doppler radar sensor 1460 is generally placed in front of the display apparatus 1400, and therefore a reflection plate 1470 may be added to reflect the wireless signal emitted from the Doppler radar sensor 1460 frontward. The reflection plate 1470 is installed in the rear cover 1430 at a position around the opening 1451 so as to face the Doppler radar sensor 1460. The reflection plate 1470 includes a reflecting surface treated to reflect the wireless signal, and the reflecting surface may be flat, curved, rounded and so on. Thus, the reflection plate 1470 reflects the wireless signal emitted from the Doppler radar sensor 1460 toward the front of the display apparatus 1400, and reflects the wireless signal received from the front of the display apparatus 1400 to the Doppler radar sensor 1460.

According to an exemplary embodiment, movement of a user is sensed by the RF sensor such as the Doppler radar sensor, and a preset operation is performed corresponding to the sensed results. Therefore, the RF sensor may be installed at the fixed position in order to determine whether a user is moving or not. Among various electronic devices, the present exemplary embodiment is applied to an image processing apparatus stationarily installed at one place rather than a mobile device to be carried by a user. As an example of the image processing apparatus, there are a TV, an electronic billboard and the like which are mounted to a mounting surface such as a wall or seated on a table, the ground, etc.

Below, it will be described that the display apparatus performs a preset operation in accordance with whether a user is moving or not.

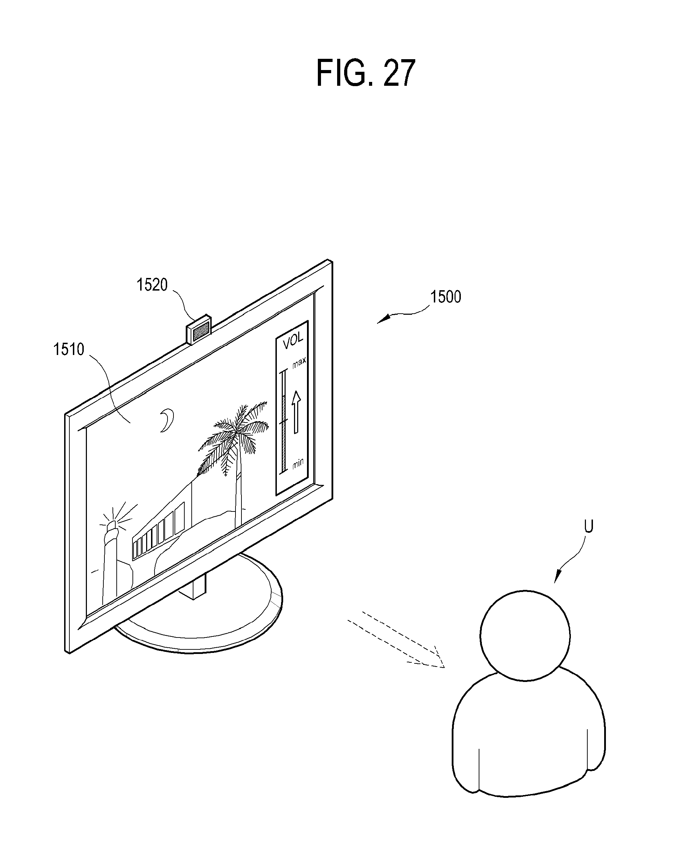

FIGs. 27 to 29 are examples that a display apparatus 1500 performs a preset operation in accordance with whether a user is moving or not.

As shown in FIG. 27, the display apparatus 1500 includes a display 1510 for displaying an image, and a sensor module 1520 for sensing movement of a user U. The sensor module 1520 is the same as the foregoing Doppler radar sensor. Thus, the detailed descriptions of the display apparatus 1500 and the sensor module 1520 will be avoided.

The display apparatus 1500 senses movement of a user through the sensor module 1520, and performs preset operations corresponding to whether a user U comes near to or goes away from the display apparatus 1500.

For instance, the preset operations are as follows. The display apparatus 1500 turns the volume up to a preset level if a user U moves away from the display apparatus 1500 while the display 1510 displays an image. Here the volume-up level may be previously set to correspond to a moving distance of a user U. If a user U moves away beyond the preset distance from the display apparatus 1500, various corresponding operations may be performed, for example, the volume may be not tuned up any more or return to a default level, or the system power of the display apparatus 1500 may be turned off.

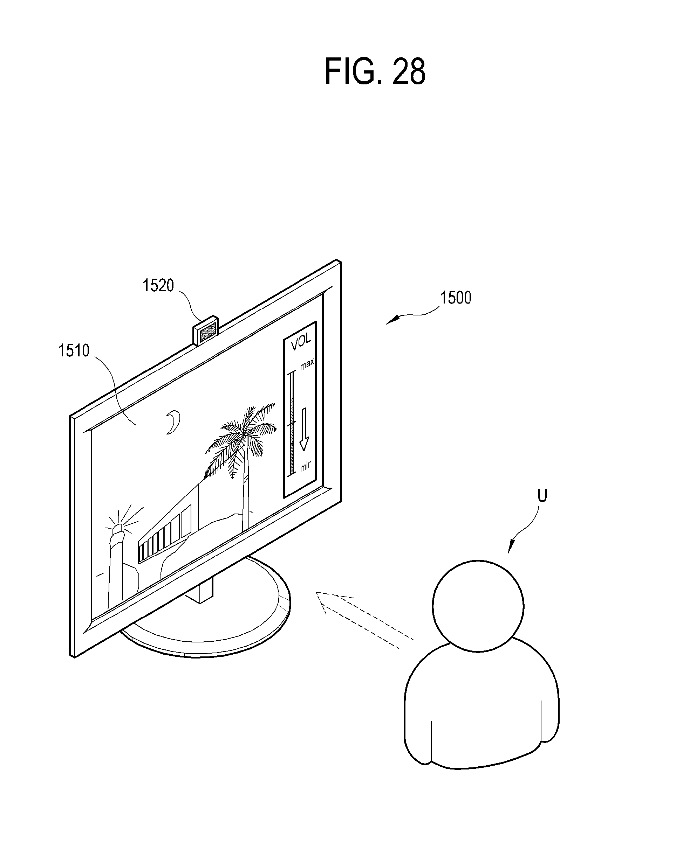

On the other hand, as shown in FIG. 28, if it is determined that a user U approaches the display apparatus 1500 while the display 1510 displays an image, the display apparatus 1500 turns the volume down to a preset level. Like the volume-up level, the volume-down level may correspond to a moving distance of a user. If a user U approaches the display apparatus 1500 within a preset range, the volume may be not turned down any more.

Thus, the display apparatus 1500 selectively performs to turn the volume up or down in accordance with whether a user U is moving or not and by considering the moving direction. The method of sensing whether a user U is moving or not through the sensor module 1520 is the same as described above.

However, the disturbance generated in the sensor module 1520 may make the sensor module 1520 sense that a user U is moving even through s/he is not moving actually. Major causes of the disturbance may include signal interference between the transmitter (not shown) for transmitting the wireless signal and the receiver (not shown) for receiving the wireless signal within the sensor module 1520. If the display apparatus 1500 cannot distinguish the disturbance, the display apparatus 1500 may perform a preset operation corresponding to movement of a user even through s/he is not moving.

Hence, according to an exemplary embodiment, the display apparatus 1500 determines whether disturbance occurs at a certain point of time when the sensor module 1520 senses that a user U is moving at the corresponding point of time. The method of determining whether the disturbance occurs or not is the same as described above. The display apparatus 1500 controls the operation to be selectively performed at the corresponding point of time in accordance with the results of determining whether the disturbance occurs or not.

For example, the display apparatus 1500 determines whether disturbance occurs at a point of time when the sensor module 1520 senses that a user U is moving. If it is determined that there is no disturbance, the display apparatus 1500 determines that the sensed results of the sensor module 1520 are caused by movement of a user U, and turns the volume up or down in accordance with his/her moving directions.

On the other hand, if it is determined that the disturbance occurs, the display apparatus 1500 determines that the sensed results of the sensor module 1520 are caused by the disturbance, and does not control the volume.

Thus, the display apparatus 1500 according to an exemplary embodiment can sense whether a user U is moving or not and perform a preset operation corresponding to the sensed results without mistaking the disturbance as his/her movement, thereby guaranteeing reliable operations.

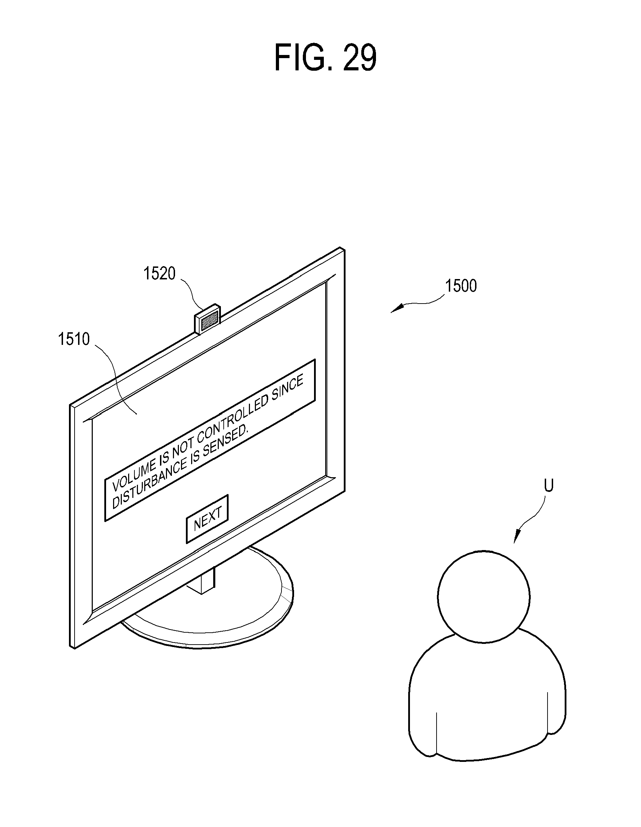

As shown in FIG. 29, the display apparatus 1500 may inform a user of results from determining that the disturbance occurs. If the display apparatus 1500 is previously set to control the volume in accordance with movement of a user U, the display apparatus 1500 determines whether the disturbance occurs when the sensor module 1520 senses that a user U is moving.

If it is determined that there is no disturbance, the display apparatus 1500 determines that the sensed results of the sensor module 1520 are reliable, and thus control the volume as it is previously set.

On the other hand, if it is determined that the disturbance occurs, the display apparatus 1500 determines that the sensed results of the sensor module 1520 are not reliable, and does not control the volume. In addition, the display apparatus 1500 may control the display 1510 to display a user interface (UI) 1511 containing a message and thus inform a user that the preset volume control is not performed since the disturbance is sensed. If the UI 1511 is displayed when a user U is not moving, a user U thinks that the display apparatus 1500 normally operates. However, if the UI 1511 is displayed even when a user U is moving, a user U thinks that the display apparatus 1500 does not normally operate. In this case, a user U may take action to repair the display apparatus 1500.

Like this, the UI 1511 is displayed so that a user can determine whether the display apparatus 1500 normally determines his/her movement.

Processes, functions, methods, programs, applications, and/or software in apparatuses described herein may be recorded, stored, or fixed in one or more non-transitory computer-readable media (computer readable storage (recording) media) that includes program instructions (computer readable instructions) to be implemented by a computer to cause one or more processors to execute (perform or implement) the program instructions. The media may also include, alone or in combination with the program instructions, data files, data structures, and the like. The media and program instructions may be those specially designed and constructed, or they may be of the kind well-known and available to those having skill in the computer software arts. Examples of non-transitory computer-readable media include magnetic media, such as hard disks, floppy disks, and magnetic tape; optical media such as CD ROM disks and DVDs; magneto-optical media, such as optical disks; and hardware devices that are specially configured to store and perform program instructions, such as read-only memory (ROM), random access memory (RAM), flash memory, and the like. Examples of program instructions include machine code, such as produced by a compiler, and files containing higher level code that may be executed by the computer using an interpreter. The program instructions may be executed by one or more processors. The described hardware devices may be configured to act as one or more software modules that are recorded, stored, or fixed in one or more non-transitory computer-readable media, in order to perform the operations and methods described above, or vice versa. In addition, a non-transitory computer-readable medium may be distributed among computer systems connected through a network and program instructions may be stored and executed in a decentralized manner. In addition, the computer-readable media may also be embodied in at least one application specific integrated circuit (ASIC) or Field Programmable Gate Array (FPGA).

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. A display apparatus installed in a predetermined installation surface, comprising:

   a display configured to display an image;
   a sensing module configured to comprise a circuit portion which generates a wireless transmission signal, a transmitter which is in electric contact with the circuit portion and which transmits the wireless transmission signal from the circuit portion to an external object to be sensed, and a receiver which is in contact with the circuit portion and which receives a wireless reception signal reflected from the external object to be sensed; and at least one processor configured to determine that the external object to be sensed is moving if a change in amplitude of the wireless transmission signal and the wireless reception signal in the sensing module is higher than a preset first threshold and a phase difference between the wireless transmission signal and the wireless reception signal is higher than a preset second threshold, and configured to perform a preset corresponding signal process in accordance with the determination results.

2. The display apparatus according to claim 1, wherein the at least one processor determines that the external object to be sensed is not moving and noise occurs due to signal interference between the transmitter and the receiver and the at least one processor does not perform the preset corresponding signal process if the change in amplitude is higher than the preset first threshold but the phase difference is not higher than the preset second threshold.

3.   The display apparatus according to claim 1, wherein the at least one processor determines the phase difference by mixing the wireless transmission signal and the wireless reception signal into a first signal, mixing the wireless transmission signal shifted in phase and the wireless reception signal into a second signal, and comparing the second threshold with an amplitude of a third signal generated based on difference in amplitude between the first signal and the second signal.

4.   The display apparatus according to claim 3, wherein the wireless transmission signal is shifted in phase by 90 degrees when the second signal is generated.

5.   The display apparatus according to claim 3, wherein the third signal is generated based on at least one among a differential of the second signal from the first signal, a differential of the first signal from the second signal, an absolute value of the differential between the first signal and the second signal, and the differential between the first signal and the second signal to the power of n, wherein n is an integer greater than zero.

6.   The display apparatus according to claim 1, wherein the at least one processor determines the change in amplitude of the wireless transmission signal and the wireless reception signal by mixing the wireless transmission signal and the wireless reception signal into a first signal, mixing the wireless transmission signal shifted in phase and the wireless reception signal into a second signal, and comparing the first threshold with an amplitude of a fourth signal which is generated by applying normalization to the first signal and the second signal.

7.   The display apparatus according to claim 6, wherein the normalization is performed by at least one of a signal envelop calculation and a norm calculation.

8.   The display apparatus according to claim 1, wherein the at least one processor determines that the external object to be sensed is not moving if the change in amplitude of the wireless transmission signal and the wireless reception signal is not higher than the first threshold.

9.   A method of controlling a display apparatus installed in a predetermined installation surface, the method comprising:

     transmitting a wireless transmission signal from a transmitter to an external object to be sensed;
     receiving a wireless reception signal, reflected from the external object to be sensed, in a receiver; and
     determining that the external object to be sensed is moving if a change in amplitude of the wireless transmission signal and the wireless reception signal in the sensing module is higher than a preset first threshold and a phase difference between the wireless transmission signal and the wireless reception signal is higher than a preset second threshold, and performing a preset corresponding signal process in accordance with the determination results.

10.  The method according to claim 9, further comprising determining that the external object to be sensed is not moving and noise occurs due to signal interference between the transmitter and the receiver and performing no preset corresponding signal process if the change in amplitude is higher than the preset first threshold but the phase difference is not higher than the preset second threshold.

11.  The method according to claim 9, wherein the determining comprises:

     generating a first signal by mixing the wireless transmission signal and the wireless reception signal, and generating a second signal by mixing the wireless transmission signal shifted in phase and the wireless reception signal; and
     determining the phase difference by comparing the preset second threshold with an amplitude of a third signal generated based on difference in amplitude between the first signal and the second signal.

12.  The method according to claim 11, wherein the wireless transmission signal is shifted in phase by 90 degrees when the second signal is generated.

13.  The method according to claim 11, wherein the third signal is generated based on at least one among a differential of the second signal from the first signal, a differential of the first signal from the second signal, an absolute value of the differential between the first signal and the second signal, and the differential between the first signal and the second signal to the power of n, where n is an integer greater than zero.

**14.** The method according to claim 9, wherein the determining comprises:

generating a first signal by mixing the wireless transmission signal and the wireless reception signal, and generating a second signal by mixing the wireless transmission signal shifted in phase and the wireless reception signal; and
determining the change in amplitude of the wireless transmission signal and the wireless reception signal by comparing the preset first threshold with an amplitude of a fourth signal generated by applying normalization to the first signal and the second signal.

**15.** The method according to claim 14, wherein the normalization is performed by at least one of a signal envelop calculation and a norm calculation.

# FIG. 1

# FIG. 2

100

110 — COMMUNICATOR

120 — PROCESSOR

130 — DISPLAY

CONTROLLER

170

SENSOR — 160

INPUT — 140

STORAGE — 150

# FIG. 3

HIGH PITCH
[HIGH FREQUENCY]

220

210

LOW PITCH
[LOW FREQUENCY]

230

# FIG. 4

300

310    320

$f_o$

$f_d$

340    330

α    v

240

# FIG. 5

# FIG. 6

# FIG. 7

# FIG. 8

700

| SENSOR MODULE | | AMP | | LPF | | ADC | | SENSING PROCESSOR |
|:---:|:---:|:---:|:---:|:---:|:---:|:---:|:---:|:---:|

710        720        730        740        750

# FIG. 9

# FIG. 10

# FIG. 11

START

S110 — TRANSMIT TRANSMISSION SIGNAL AND RECEIVE RECEPTION SIGNAL

S120 — TRANSMISSION SIGNAL*RECEPTION SIGNAL => I-SIGNAL

S130 — (TRANSMISSION SIGNAL SHIFTED IN PHASE) * RECEPTION SIGNAL => Q-SIGNAL

S140 — NORMALIZE AND MIX I-SIGNAL AND Q-SIGNAL => C-SIGNAL

S150 — (C-SIGNAL OF PREDETERMINED TIME SECTION) ≥ FIRST THRESHOLD?  — NO

YES

S160 — THERE PHASE DIFFERENCE BETWEEN I-SIGNAL AND Q-SIGNAL? — NO

YES

S180 — DETERMINE THAT OBJECT IS NOT MOVING

S170 — DETERMINE THAT OBJECT IS MOVING

END

# FIG. 12

START

S210 — GENERATE D-SIGNAL BASED DIFFERENCE BETWEEN I-SIGNAL AND Q-SIGNAL

S220 — D-SIGNAL ≥ SECOND THRESHOLD?

NO

S240 — DETERMINE THAT THERE IS NO PHASE DIFFERENCE BETWEEN I AND Q

YES

S230 — DETERMINE THAT THERE IS PHASE DIFFERENCE BETWEEN I AND Q

END

# FIG. 13

# FIG. 14

# FIG. 15

EP 3 021 133 A1

# FIG. 16

## FIG. 17

# FIG. 18

FIG. 19

# FIG. 20

EP 3 021 133 A1

# FIG. 21

# FIG. 22

EP 3 021 133 A1

# FIG. 23

```
        ┌─────────┐
        │  START  │
        └─────────┘
             │
             ▼
```

S310 —— INFRARED SENSOR: ACTIVATED /
DOPPLER SENSOR: INACTIVATED

S320 —— USER SENSED BY INFRARED SENSOR?                NO

YES

S330 —— DOPPLER SENSOR: ACTIVATED

S340 —— DETERMINE MOVING STATE OF USER
THROUGH DOPPLER SENSOR

```
        ┌─────────┐
        │   END   │
        └─────────┘
```

# FIG. 24

# FIG. 25

# FIG. 26

# FIG. 27

# FIG. 28

# FIG. 29

VOLUME IS NOT CONTROLLED SINCE DISTURBANCE IS SENSED.

NEXT

Europäisches
Patentamt

European
Patent Office

Office européen
des brevets

# EUROPEAN SEARCH REPORT

Application Number

EP 15 19 0889

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2014/006967 A1 (OKI ELECTRIC IND CO LTD [JP]) 9 January 2014 (2014-01-09) | 1,2, 6-10,14, 15 | INV. G01S13/56 |
| Y | * paragraph [0048] - paragraph [0050]; figures 1,2,4 * | 3-5, 11-13 | ADD. G01S13/58 |
| Y | US 3 665 443 A (GALVIN AARON A) 23 May 1972 (1972-05-23) | 3-5, 11-13 | |
| A | * figure 4 * | 1,2, 6-10,14, 15 | |
| A | Merrill I. Skolnik: "Chapter three: CW and Frequency-Modulated Radar" In: "Introduction To Radar Systems", 1 January 1981 (1981-01-01), McGraw Hill, XP055047545, ISBN: 978-0-07-057909-5 pages 68-100, * page 70 - page 81 * | 1-15 | |
| A | US 2010/177929 A1 (KURTZ ANDREW F [US] ET AL) 15 July 2010 (2010-07-15) * paragraph [0119]; figure 3a * | 1-15 | TECHNICAL FIELDS SEARCHED (IPC) H04N G06F |
| A | US 2012/068876 A1 (BANGERA MAHALAXMI GITA [US] ET AL) 22 March 2012 (2012-03-22) * the whole document * | 1-15 | |
| A | US 3 942 178 A (HACKETT KENNETH R) 2 March 1976 (1976-03-02) * figures 4-9 * | 1-15 | |
| A | US 3 947 834 A (GERSHBERG DAVID N ET AL) 30 March 1976 (1976-03-30) * figure 3 * | 1-15 | |

The present search report has been drawn up for all claims

| Place of search | Date of completion of the search | Examiner |
|---|---|---|
| Munich | 4 March 2016 | Rudolf, Hans |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 15 19 0889

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2016

| Patent document cited in search report | | Publication date | Patent family member(s) | | Publication date |
|---|---|---|---|---|---|
| WO 2014006967 | A1 | 09-01-2014 | JP | 5477424 B2 | 23-04-2014 |
| | | | JP | 2014010095 A | 20-01-2014 |
| | | | US | 2015186569 A1 | 02-07-2015 |
| | | | WO | 2014006967 A1 | 09-01-2014 |
| US 3665443 | A | 23-05-1972 | DE | 2144050 A1 | 09-03-1972 |
| | | | FR | 2105225 A1 | 28-04-1972 |
| | | | GB | 1358931 A | 03-07-1974 |
| | | | JP | S5637596 B1 | 01-09-1981 |
| | | | SE | 368291 B | 24-06-1974 |
| | | | US | 3665443 A | 23-05-1972 |
| US 2010177929 | A1 | 15-07-2010 | NONE | | |
| US 2012068876 | A1 | 22-03-2012 | US | 2012068876 A1 | 22-03-2012 |
| | | | WO | 2012036753 A1 | 22-03-2012 |
| US 3942178 | A | 02-03-1976 | CA | 1044353 A | 12-12-1978 |
| | | | DE | 2508796 A1 | 09-10-1975 |
| | | | FR | 2266234 A1 | 24-10-1975 |
| | | | GB | 1509682 A | 04-05-1978 |
| | | | IT | 1029877 B | 20-03-1979 |
| | | | JP | S50129200 A | 13-10-1975 |
| | | | NL | 7502198 A | 30-09-1975 |
| | | | US | 3942178 A | 02-03-1976 |
| US 3947834 | A | 30-03-1976 | NONE | | |

EPO FORM P0459

For more details about this annex : see Official Journal of the European Patent Office, No. 12/82